# EUROPEAN PATENT APPLICATION

(11) **EP 4 561 153 A1**
(43) Date of publication of application: **28.05.2025**
(21) Application number: 22951467.4
(22) Date of filing: 19.07.2022
(51) Int. Cl.: H04W 24/08

(54) **POWER HEADROOM REPORTING METHOD BASED ON MULTI-PANEL TRANSMISSION, AND APPARATUS**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/106586
(87) International publication number: WO 2024/016189

(57) **Abstract**

Disclosed in embodiments of the present disclosure are a power headroom (PH) reporting method based on multi-panel transmission, and an apparatus, which can be applied to the technical field of communications. A method performed by a terminal device having multiple panels comprises: when the terminal device does not actually send a PUSCH on a first sending time slot corresponding to a PUSCH carrying MAC-CE PHR reporting, and the PUSCH is configured or scheduled to perform STxMP, calculating and reporting a PHR on the basis of a maximum power configuration of the terminal device and according to virtual PH. Thus, a network device can perform accurate resource scheduling on each panel according to the PHR, thereby ensuring the reliability of uplink transmission.

## Description

### TECHNICAL FIELD

The present disclosure relates to a field of communication technology, and specifically to a power headroom reporting method and apparatus based on a multi-panel transmission.

### BACKGROUND

In a multi-transmission and receiving point (Multi-TRP) scenario, the R18 standard considers using a terminal with multiple panels for simultaneous uplink transmission to improve the throughput and reliability of the uplink transmission. For the uplink transmission, the terminal needs to measure and report a power headroom report (PHR) to a network device, so that the network device can schedule resources according to the PHR. Therefore, how the terminal with multiple panels reports the PHR is a problem to be solved urgently.

### SUMMARY

Embodiments of the present disclosure provide a power headroom reporting method and apparatus based on a multi-panel transmission.

According to a first aspect of the embodiments of the present disclosure, a power headroom reporting method based on a multi-panel transmission is provided, performed by a terminal having multiple panels, including: calculating and reporting a power headroom report (PHR) according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

In the present disclosure, in a case where the terminal has no PUSCH actually sent on the first transmission time slot corresponding to the PUSCH for carrying the MACCE PHR, and the PUSCH is configured or scheduled for the STxMP, the terminal can calculate and report the PHR according to the virtual PH and based on the maximum power configuration of the terminal. Therefore, the network device can accurately schedule resources for each panel based on the PHR, thereby ensuring the reliability of uplink transmission.

According to a second aspect of the embodiments of the present disclosure, a power headroom reporting method based on a multi-panel transmission is provided, performed by a network device, including: determining that a power headroom report (PHR) reported by a terminal is calculated according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

In the present disclosure, in a case where the terminal has no PUSCH actually sent on the first transmission time slot corresponding to the PUSCH for carrying the MACCE PHR, and the PUSCH is configured or scheduled for the STxMP, the network device can determine that the PHR reported by the terminal is calculated according to the virtual PH and based on the maximum power configuration of the terminal. Therefore the network device can accurately schedule resources for each panel based on the PHR, thereby ensuring the reliability of uplink transmission.

According to a third aspect of the embodiments of the present disclosure, a communication apparatus is provided. The communication apparatus is applicable to a terminal having multiple panels. The communication apparatus may include a processing module, configured to calculate and report a power headroom report (PHR) according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

According to a fourth aspect of the embodiments of the present disclosure, a communication apparatus is provided. The communication apparatus is applicable to a network device. The communication apparatus may include a processing module, configured to determine that a power headroom report (PHR) reported by a terminal is calculated according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

According to a fifth aspect of the embodiments of the present disclosure, a communication apparatus including a processor and a memory for storing a computer program is provided. When the computer program stored in a memory is executed by the processor, the communication apparatus is caused to implement the method described in the first aspect.

According to a sixth aspect of the embodiments of the present disclosure, a communication apparatus including a processor and a memory for storing a computer program is provided. When the computer program stored in a memory is executed by the processor, the communication apparatus is caused to implement the method described in the second aspect.

According to a seventh aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the first aspect.

According to an eighth aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the second aspect.

According to a ninth aspect of the embodiments of the present disclosure, a power headroom reporting system based on a multi-panel transmission is provided, in which the system includes the communication apparatus described in the third aspect and the communication apparatus described in the fourth aspect, or the communication apparatus described in the fifth aspect and the communication apparatus described in the sixth aspect, or the communication apparatus described in the seventh aspect and the communication apparatus described in the eighth aspect.

According to a tenth aspect of the embodiments of the present disclosure, a computer-readable storage medium for storing instructions used by the terminal is provided. When the instructions are executed, the terminal is caused to implement the method described in the first aspect.

According to an eleventh aspect of the embodiments of the present disclosure, a computer-readable storage medium for storing instructions used by the network device is provided. When the instructions are executed, the network device is caused to implement the method described in the second aspect.

According to a twelve aspect of the embodiments of the present disclosure, a computer program product including a computer program is provided. When the computer program is running on a computer, the computer is caused to perform the method described in the first aspect.

According to a thirteenth aspect of the embodiments of the present disclosure, a computer program product including a computer program is provided. When the computer program is running on a computer, the computer is caused to perform the method described in the second aspect.

According to a fourteenth aspect of the embodiments of the present disclosure, a chip system is provided, including at least one processor and an interface configured to support the terminal to perform the functions in the first aspect, for example, at least one of determining or processing data and information in the above method. In one possible design, the chip system also includes a memory for saving a computer program and data necessary for the terminal. The chip system may include a chip, or a chip and other discrete devices.

According to a fifteenth aspect of the embodiments of the present disclosure, a chip system is provided, including at least one processor and an interface configured to support the network device to perform the functions in the second aspect, for example, at least one of determining or processing data and information in the above method. In one possible design, the chip system also includes a memory for saving a computer program and data necessary for the network device. The chip system may include a chip, or a chip and other discrete devices.

According to a sixteenth aspect of the embodiments of the present disclosure, a computer program is provided. When the computer program is running on a computer, the computer is caused to implement the method described in the first aspect.

According to a seventeenth aspect of the embodiments of the present disclosure, a computer program is provided. When the computer program is running on a computer, the computer is caused to implement the method described in the second aspect.

### BRIEF DESCRIPTION OF THE DRAWINGS

In order to clearly illustrate technical solutions of the embodiments and the background of the present disclosure, a brief description of drawings used in embodiments and the background is given below.
FIG. 1 is a schematic diagram of a communication system according to an embodiment of the present disclosure.
FIG. 2 is a flowchart of a power headroom reporting method based on a multi-panel transmission according to an embodiment of the present disclosure.
FIG. 3 is another flowchart of a power headroom reporting method based on a multi-panel transmission according to an embodiment of the present disclosure.
FIG. 4 is another flowchart of a power headroom reporting method based on a multi-panel transmission according to an embodiment of the present disclosure.
FIG. 5 is another flowchart of a power headroom reporting method based on a multi-panel transmission according to an embodiment of the present disclosure.
FIG. 6 is another flowchart of a power headroom reporting method based on a multi-panel transmission according to an embodiment of the present disclosure.
FIG. 7 is another flowchart of a power headroom reporting method based on a multi-panel transmission according to an embodiment of the present disclosure.
FIG. 8 is another flowchart of a power headroom reporting method based on a multi-panel transmission according to an embodiment of the present disclosure.
FIG. 9 is another flowchart of a power headroom reporting method based on a multi-panel transmission according to an embodiment of the present disclosure.
FIG. 10 is another flowchart of a power headroom reporting method based on a multi-panel transmission according to an embodiment of the present disclosure.
FIG. 11 is another flowchart of a power headroom reporting method based on a multi-panel transmission according to an embodiment of the present disclosure.
FIG. 12 is another flowchart of a power headroom reporting method based on a multi-panel transmission according to an embodiment of the present disclosure.
FIG. 13 is a block diagram of a communication apparatus according to an embodiment of the present disclosure.
FIG. 14 is another block diagram of a communication apparatus according to an embodiment of the present disclosure.
FIG. 15 is a block diagram of a chip according to an embodiment of the present disclosure.

### DETAILED DESCRIPTION

For ease of understanding, the terms involved in the disclosure are introduced firstly.

### 1. Power headroom report (PHR)

PHR reflects an available power of a terminal, that is, a power headroom. In the control of uplink transmission, it is required to measure and report the power headroom to the network device.

Here, the multi-TRP uplink transmission is mainly related to a Type 1 power headroom report. The report includes the power headroom and a maximum transmit power Pcmax on a component carrier. The Pcmax is configured by the network to the terminal explicitly. When the network knows a modulation and coding scheme (MCS) at a time moment corresponding to the power headroom report and a resource size used by the terminal for transmission, the network can determine an effective combination of the MCS and the allocated resource size. When there is no actual PUSCH transmission, the terminal can also report the Type 1 power headroom.

An existing PHR measurement mechanism includes an actual PHR or a virtual PHR. When there is physical uplink shared channel (PUSCH) transmission, the terminal reports the actual PHR to the network device. If there is no PUSCH transmission, the terminal calculates a PHR according to a predefined PUSCH format and sends it to the network device that is, reporting the virtual PHR. The network device will determine a bandwidth that the terminal can send and a transmission mode based on power difference information of the terminal.

### 2. Transmission and receiving point (TRP)

TRP is equivalent to a traditional base station, but in some cases, a cell may be covered by more than one TRP, for example jointly covered by multiple TRPs.

### 3. PUSCH

PUSCH is used to carry data from a transmission channel USCH. Sharing means that a same physical channel can be used by multiple terminals in a time division manner, or that the channel has a short duration.

### 4. Uplink simultaneous transmission of multiple panels (STxMP)

Utilizing cooperation between multiple panels to transmit/receive channels from multiple beams of multiple angles may overcome various occlusion or blocking effects better and ensure robustness of a link connection.

### 5. Media access control control element (MAC CE)

MAC CE is a way for the terminal and the network device to exchange control information, which is mainly about control information of a MAC layer.

In order to better understand a power headroom reporting method based on a multi-panel transmission in the embodiments of the present disclosure, a communication system to which the embodiments of the present disclosure is applicable is firstly described as follows.

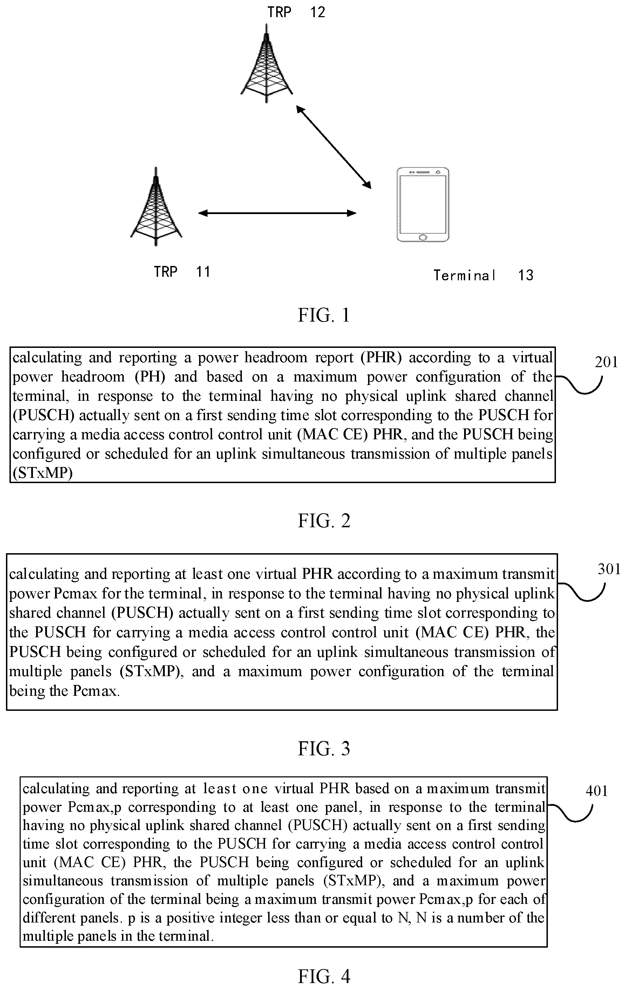

Please refer to FIG. 1, which is a schematic diagram of a communication system according to an embodiment of the present disclosure. The communication system may include, but is not limited to, one network device (such as TRP) and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including two TRPs, i.e., TRP11 and TRP12, and one terminal 13 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

Each of the TRP 11 and the TRP12 in the embodiments of the present disclosure is an entity on the network side for sending or receiving signals. For example, the TRP may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU. In the present disclosure, the TRP may be replaced with a remote radio head, or an antenna panel, or the like.

The terminal 13 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in autonomous driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

In the present disclosure, since each panel of the terminal has an independent power amplifier (PA) implementation structure, it can support an independent power control process. Therefore, a maximum transmit power Pcmax can be configured for the terminal, or a maximum transmit power Pcmax,p corresponding to each panel can be configured for each panel of the terminal. Thereafter, the terminal can determine a PHR based on the Pcmax of the terminal and/or the Pcmax,p corresponding to each panel of the terminal, and then the network device can determine a power headroom (PH) of the terminal based on the PHR, and schedule resources for each panel based on the PH, thus ensuring the reliability of uplink transmission.

It should be noted that in the present disclosure, a power headroom reporting method based on a multi-panel transmission provided in any embodiment can be executed alone, or can be executed together in combination with possible implementation methods in other embodiments, or can be executed together in combination with any technology solution in the related art.

Embodiments of the present disclosure will now be further described with reference to the accompanying drawings and specific implementations.

Reference will now be made in detail to illustrative embodiments, examples of which are illustrated in the accompanying drawings. When the following description refers to the accompanying drawings, the same numbers in different drawings represent the same or similar elements, unless otherwise specified. The implementations set forth in the following illustrative embodiments do not represent all implementations consistent with the present disclosure. Instead, they are merely examples of apparatuses and methods consistent with aspects of the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the present disclosure are also intended to include the plural form, unless the context clearly indicates other meaning. It should also be understood that the term "and/or" as used herein refers to any or all possible combinations of one or more associated listed items.

Depending on the context, the words "if" and "in response to" used here can be interpreted as "when", "while" or "in response to determining".

The embodiments of the present disclosure are described in detail below, examples of which are illustrated in the accompanying drawings, the same or similar reference numerals refer to the same or similar elements throughout. The embodiments described below with reference to the accompanying drawings are illustrative and intended to explain the present disclosure and are not to be construed as limitations of the present disclosure.

In the present disclosure, the terminal having multiple panels refers to a terminal has a plurality of panels.

Referring to FIG. 2, FIG. 2 is a flowchart of a power headroom reporting method based on a multi-panel transmission according to an embodiment of the present disclosure. The method is performed by a terminal having multiple panels. As illustrated in FIG. 2, the method may include, but not limited to, the following step.

At step 201, a power headroom report (PHR) is calculated and reported according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

The first sending time slot corresponding to the PUSCH for carrying the MAC CE PHR may be a sending time slot having the smallest time domain position in various sending time slots corresponding to the PUSCH for carrying the MAC CE PHR that is determined according to downlink control information (DCI).

In the present disclosure, when the terminal performs uplink transmission, in order to ensure the reliability of uplink transmission, the terminal may report a PHR to the network device. When the terminal has no PUSCH actually sent on the first sending time slot corresponding to the PUSCH for carrying the MAC CE PHR, the PHR can be calculated and reported according to a virtual PH, i.e., reporting a virtual PHR. Therefore, the network device can determine the power headroom of the terminal based on the PHR, and in combination with the coding and modulation scheme of the terminal, the network device can accurately determine a bandwidth that the terminal can send and a transmission mode, thereby ensuring the reliability of the uplink transmission.

Optionally, the maximum power configuration of the terminal may include the maximum transmit power Pcmax for the terminal, or may be the maximum transmit power Pcmax,p for each of different panels, or may include both the Pcmax and the Pcmax,p, which is not limited in the present disclosure.

The PHR may include a virtual PH and a PHR reference format filed and so on. The PH may be a virtual value calculated by the terminal based on the maximum transmit power and according to a predetermined PUSCH format. The PHR reference format field may be used to indicate whether the reported PH value is determined based on an actual transmission or a reference format. For example, if a value of the PHR reference format field is set to 0, it indicates that the reported PH value is determined based on an actual transmission. If the value of the PHR reference format field is set to 1, it indicates that the reported PH value is determined based on a reference format.

Optionally, the terminal can calculate and report at least one virtual PHR based on the maximum transmit power Pcmax for the terminal and according to the virtual PH; or can calculate and report at least one virtual PHR based on the maximum transmit powers Pcmax,p for different panels and according to the virtual PH; or can calculate and report at least one virtual PHR based on the Pcmax and the Pcmax,p and according to the virtual PH, etc., which is not limited in the present disclosure.

Optionally, the PUSCH transmission sent by the terminal may be scheduled using a space division multiplexing (SDM) mode or a frequency division multiplexing (FDM) mode based on a single downlink control information (DCI) to implement an uplink simultaneous transmission (STxMP) from multiple panels towards multiple TRPs, and different beams are used to send the PUSCH from different panels. Therefore, when the PUSCH is scheduled based on a single DCI, a reference format of the virtual PHR can be determined based on transmission modes on different panels when one PUSCH is sent through the SDM or FDM transmission scheme based on the multiple panels or based on other predetermined reference signal transmission modes.

Optionally, the PUSCH transmission may be scheduled using a space division multiplexing (SDM) mode or a frequency division multiplexing (FDM) mode or a time division multiplexing (TDM) mode based on multiple DCIs to implement the transmission from multiple panels towards multiple TRPs, and different beams are used to send the PUSCH from different panels. Therefore, when the PUSCH is sent through cooperated transmission scheme and scheduled based on multiple DCIs, a reference format of the virtual PHR can be determined based on transmission modes on different panels when two PUSCHs are sent through the SDM, FDM or TDM transmission scheme based on the multiple panels or based on other predetermined reference signal transmission modes.

In the present disclosure, when the terminal has no PUSCH actually sent on the first sending time slot corresponding to the PUSCH for carrying the MAC CE PHR, and the PUSCH is configured or scheduled for the uplink simultaneous transmission of multiple panels, the terminal can calculate the PHR according to the virtual PH and based on the maximum power configuration of the terminal, and report the PHR when a PHR reporting condition is met.

In present disclosure, when the terminal has no PUSCH actually sent on the first sending time slot corresponding to the PUSCH for carrying the MAC CE PHR, and the PUSCH is configured or scheduled for the STxMP, the terminal can calculate and report the PHR according to the virtual PH and based on the maximum power configuration of the terminal. Therefore, the network device can accurately schedule resources for each panel based on the PHR, thereby ensuring the reliability of uplink transmission.

Referring to FIG. 3, FIG. 3 is a flowchart of a power headroom reporting method based on a multi-panel transmission according to an embodiment of the present disclosure. The method is performed by a terminal having multiple panels. As illustrated in FIG. 3, the method may include, but not limited to, the following step.

At step 301, at least one virtual PHR is calculated and reported according to a maximum transmit power Pcmax for the terminal, in response to the terminal having no physical uplink shared channel (PUSCH) actually sent on a first sending time slot corresponding to the PUSCH for carrying a media access control control unit (MAC CE) PHR, the PUSCH being configured or scheduled for an uplink simultaneous transmission of multiple panels (STxMP), and a maximum power configuration of the terminal being the Pcmax.

In the present disclosure, when the maximum power configuration of the terminal includes the maximum transmit power Pcmax for the terminal, the PUSCH is configured or scheduled for the STxMP, and there is no PUSCH actually sent, the terminal can perform allocation of the Pcmax according to a preset power allocation rule, to determine a maximum transmit power corresponding to each panel of the terminal, and determine the virtual PHR corresponding to each panel according to the maximum transmit power corresponding to each panel.

Optionally, one panel of the terminal having multiple panels may be used towards a single TRP. In case of based on a transmission reference assumption for a PUSCH transmission from one panel of the terminal towards a single TRP, the virtual PHR corresponding to at least one panel may be calculated and reported according to the Pcmax of the terminal and the power allocation rule, and the virtual PHR is sent to the network device. The PHR is associated with a transmission occasion corresponding to a PUSCH transmission reference assumption on the panel for which the virtual PHR is calculated.

Optionally, the terminal may calculate and report a virtual PHR corresponding to a predefined panel according to the Pcmax and the power allocation rule.

Alternatively, the terminal may calculate and report a virtual PHR corresponding to a panel indicated by first indication information sent by the network device according to the Pcmax and the power allocation rule.

Alternatively, the terminal may calculate and report a virtual PHR corresponding to a panel selected by terminal according to the Pcmax and the power allocation rule.

Alternatively, the terminal may calculate and report a virtual PHR corresponding to a panel under a predefined rule according to the Pcmax and the power allocation rule. For example, the PHR corresponding to the panel with the smallest maximum transmit power in the multiple panels of the terminal is calculated.

Optionally, the terminal may calculate and report virtual PHRs corresponding respectively to two panels according to the Pcmax and the power allocation rule, and simultaneously report the virtual PHRs corresponding respectively to two panels. The two panels are panels determined by the terminal for uplink transmission.

Optionally, one panel of the terminal having multiple panels may be used towards multiple TRPs. In case of based on a transmission reference assumption for cooperated PUSCH transmissions from two panels of the terminal towards multiple TRPs, the virtual PHRs corresponding respectively to two panels may be calculated and reported according to the Pcmax of the terminal and the power allocation rule, and the virtual PHRs corresponding respectively to two panels are simultaneously reported to the network device. Each PHR is associated with a transmission occasion corresponding to a PUSCH transmission reference assumption on the panel for which the virtual PHR is calculated.

Optionally, the terminal can perform power allocation of the Pcmax according to an average allocation rule to determine the maximum transmit power corresponding to each panel. For example, the Pcmax is 23 decibel relative to one milliwatt (dBm), and there are two panels in the terminal. According to the average allocation rule, it can be determined that the maximum transmit power corresponding to each panel is 20dBm.

Alternatively, the terminal can also perform power allocation of the Pcmax according to a dynamic allocation rule to determine the maximum transmit power corresponding to each panel. The dynamic allocation rule can be indicated by the network device or determined according to a protocol agreement. For example, when actual power output capabilities of the two panels of the terminal are different, panel#1 has a larger power amplifier and supports a higher actual transmit power. In this case, the allocation can be performed between the two panels according to a dynamic manner in consideration with PA capabilities. For example, the PA on panel #1 supports 23dBm, and the PA on panel #2 supports 26dBm, but the maximum transmit power of the terminal is configured to 26dBm. In this case, the allocation can be performed between the two panels according to an average manner in consideration with the transmit power. The allocation can be performed between the two panels according to a dynamic manner in consideration with PA capabilities. For example, the maximum transmit power of panel #2 accounts for 70% of the maximum transmit power of the terminal. In this case, if the Pcmax of the terminal is 26dBm, it can be determined according to the dynamic allocation rule that when panel#1 occupies 30%, the actual allocated result refers to that the maximum transmit power corresponding to panel#1 is 21dBm, and the maximum transmit power corresponding to panel#2 is 24.5dBm.

In the present disclosure, for the specific explanation of the PHR, reference can be made to detailed descriptions of any embodiment of the disclosure, which will not be described again here.

Optionally, the PUSCH transmission sent by the terminal may be scheduled using a space division multiplexing (SDM) mode or a frequency division multiplexing (FDM) mode based on a single downlink control information (DCI) to implement an uplink simultaneous transmission (STxMP) from multiple panels towards multiple TRPs, and different beams are used to send the PUSCH from different panels. Therefore, when the PUSCH is scheduled based on a single DCI, a reference format of the virtual PHR can be determined based on transmission modes on different panels when one PUSCH is sent through the SDM or FDM transmission scheme based on the multiple panels or based on other predetermined reference signal transmission modes.

Optionally, the PUSCH transmission may be scheduled using a space division multiplexing (SDM) mode or a frequency division multiplexing (FDM) mode or a time division multiplexing (TDM) mode based on multiple DCIs to implement the transmission from multiple panels towards multiple TRPs, and different beams are used to send the PUSCH from different panels. Therefore, when the PUSCH is sent through cooperated transmission scheme and scheduled based on multiple DCIs, a reference format of the virtual PHR can be determined based on transmission modes on different panels when two PUSCHs are sent through the SDM, FDM or TDM transmission scheme based on the multiple panels or based on other predetermined reference signal transmission modes.

In the present disclosure, when the terminal has no PUSCH actually sent on the first sending time slot corresponding to the PUSCH for carrying the MAC CE PHR, the PUSCH is configured or scheduled for the STxMP, and the maximum power configuration of the terminal is the maximum transmit power Pcmax for the terminal, the terminal can calculate and report at least one virtual PHR based on the Pcmax. As a result, the network device can accurately schedule resources for each panel based on the PHR, thereby ensuring the reliability of uplink transmission.

Referring to FIG. 4, FIG. 4 is a flowchart of a power headroom reporting method based on a multi-panel transmission according to an embodiment of the present disclosure. The method is performed by a terminal having multiple panels. As illustrated in FIG. 4, the method may include, but not limited to, the following step.

At step 401, at least one virtual PHR is calculated and reported based on a maximum transmit power Pcmax,p corresponding to at least one panel, in response to the terminal having no physical uplink shared channel (PUSCH) actually sent on a first sending time slot corresponding to the PUSCH for carrying a media access control control unit (MAC CE) PHR, the PUSCH being configured or scheduled for an uplink simultaneous transmission of multiple panels (STxMP), and a maximum power configuration of the terminal being a maximum transmit power Pcmax,p for each of different panels. p is a positive integer less than or equal to N, N is a number of the multiple panels in the terminal.

p is used to indicate an index corresponding to a panel.

In the present disclosure, when the maximum power configuration of the terminal includes the maximum transmit powers Pcmax,p for different panels, the PUSCH is configured or scheduled for the STxMP, and there is no PUSCH actually sent, in case of based on a transmission reference assumption for a PUSCH transmission from one panel of the terminal towards a single TRP, a virtual PHR corresponding to at least one panel may be calculated and reported according to the Pcmax,p corresponding to the at least one panel. The PHR is associated with a transmission occasion corresponding to a PUSCH transmission reference assumption on the panel for which the virtual PHR is calculated.

Optionally, the terminal may calculate and report a virtual PHR corresponding to a specified panel according to a Pcmax,p corresponding to the specified panel. The specified panel may be predefined, or indicated by the network device, which is not limited herein.

Alternatively, the terminal may calculate and report a virtual PHR of a corresponding panel according to a Pcmax,p under a predefined rule. For example, the PHR corresponding to the panel with the smallest maximum transmit power in multiple panels of the terminal may be calculated.

Alternatively, the terminal may calculate two virtual PHRs of two panels respectively based on a maximum transmit power Pcmax,p corresponding to the selected panel, and report the virtual PHR corresponding to one panel. For example, the terminal may report the PHR with a smaller PH value in the two virtual PHRs.

Alternatively, the terminal may calculate and report two virtual PHRs of two panels respectively according to two maximum transmit powers Pcmax,p corresponding respectively to the two panels, and simultaneously report the two virtual PHRs to the network device. The two panels are panels for uplink transmission of the terminal.

Optionally, when the network device configures the maximum transmit power Pcmax for each panel of the terminal, the PUSCH is configured or scheduled for the STxMP, and there is no PUSCH actually sent, in a case of based on a transmission reference assumption for cooperated PUSCH transmissions from two panels of the terminal towards multiple TRPs, the virtual PHRs corresponding respectively to two panels may be calculated and reported according to the maximum transmit powers Pcmax,p corresponding respectively to the two panels, and the virtual PHRs corresponding respectively to the two panels are simultaneously reported to the network device. Each PHR is associated with a transmission occasion corresponding to a PUSCH transmission reference assumption on the panel for which the PHR is calculated.

In the present disclosure, for the specific explanation of the PHR, reference can be made to detailed descriptions of any embodiment of the disclosure, which will not be described again here.

Optionally, the PUSCH transmission sent by the terminal may be scheduled using a space division multiplexing (SDM) mode or a frequency division multiplexing (FDM) mode based on a single downlink control information (DCI) to implement an uplink simultaneous transmission (STxMP) from multiple panels towards multiple TRPs, and different beams are used to send the PUSCH from different panels. Therefore, when the PUSCH is scheduled based on a single DCI, a reference format of the virtual PHR can be determined based on transmission modes on different panels when one PUSCH is sent through the SDM or FDM transmission scheme based on the multiple panels or based on other predetermined reference signal transmission modes.

Optionally, the PUSCH transmission may be scheduled using a space division multiplexing (SDM) mode or a frequency division multiplexing (FDM) mode or a time division multiplexing (TDM) mode based on multiple DCIs to implement the transmission from multiple panels towards multiple TRPs, and different beams are used to send the PUSCH from different panels. Therefore, when the PUSCH is sent through cooperated transmission scheme and scheduled based on multiple DCIs, a reference format of the virtual PHR can be determined based on transmission modes on different panels when two PUSCHs are sent through the SDM, FDM or TDM transmission scheme based on the multiple panels or based on other predetermined reference signal transmission modes.

In the present disclosure, when the terminal has no PUSCH actually sent on the first sending time slot corresponding to the PUSCH for carrying the MAC CE PHR, the PUSCH is configured or scheduled for the STxMP, and the maximum power configuration of the terminal includes the Pcmax,p corresponding to different panels, the terminal can calculate and report at least one virtual PHR based on the maximum transmit power Pcmax,p corresponding to at least one panel. As a result, the network device can accurately schedule resources for each panel based on the PHR, thereby ensuring the reliability of uplink transmission.

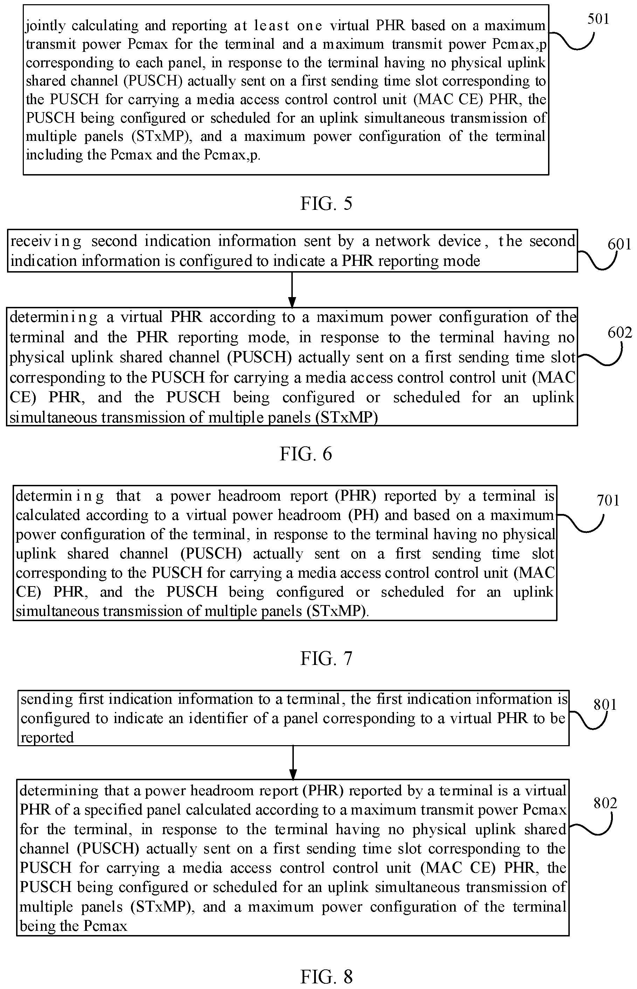

Referring to FIG. 5, FIG. 5 is a flowchart of a power headroom reporting method based on a multi-panel transmission according to an embodiment of the present disclosure. The method is performed by a terminal having multiple panels. As illustrated in FIG. 5, the method may include, but not limited to, the following step.

At step 501, at least one virtual PHR is jointly calculated and reported based on a maximum transmit power Pcmax for the terminal and a maximum transmit power Pcmax,p corresponding to each panel, in response to the terminal having no physical uplink shared channel (PUSCH) actually sent on a first sending time slot corresponding to the PUSCH for carrying a media access control control unit (MAC CE) PHR, the PUSCH being configured or scheduled for an uplink simultaneous transmission of multiple panels (STxMP), and a maximum power configuration of the terminal including the Pcmax and the Pcmax,p.

In the present disclosure, when the maximum power configuration of the terminal includes the maximum transmit power Pcmax for the terminal and the maximum transmit power Pcmax,p corresponding to each panel, the PUSCH is configured or scheduled for the STxMP, and there is no PUSCH actually sent, in case of based on a transmission reference assumption for a PUSCH transmission from one panel of the terminal towards a single TRP, the terminal can calculate and report at least one virtual PHR corresponding to the panel according to the Pcmax and the Pcmax,p corresponding to the panel.

In other words, the terminal may report at least one virtual PHR corresponding to the panel under the reference assumption only. The panel under the reference assumption may be indicated by the network device, or may be selected by the terminal, for example the panel with the smallest PH value is selected, or may be the panel under a predefined rule, for example the panel corresponding to the smallest SRS ID, which is not limited in the present disclosure.

Optionally, the terminal may calculate and report a virtual PHR corresponding to a panel based on the Pcmax. Alternatively, the terminal may calculate and report a virtual PHR corresponding to a panel based on the Pcmax,p corresponding to the panel. Alternatively, the terminal may calculate and report two virtual PHRs corresponding to a panel based on the Pcmax and the Pcmax,p corresponding to the panel.

For example, if the terminal includes panel1 and panel2, and a transmit power p1 is obtained by using a transmission reference assumption of panel1 and a transmit power p2 is obtained by using a transmission reference assumption of panel2. Based on the Pcmax and the Pcmax,p1, the power headroom corresponding to panel1 may be calculated as PH1 and PH1', respectively. Based on the Pcmax and the Pcmax,p 1, the power headroom corresponding to panel2 may be calculated as PH2 and PH2', respectively. Then in a case where panel1 is configured as a transmit panel under the reference assumption, the terminal can report PH1 to the network device, or can report PH1' to the network device, or can also report PH1 together with PH1' to the network device, which are not limited in the present disclosure here.

Optionally, in case of based on a transmission reference assumption for cooperated PUSCH transmissions from two panels of the terminal towards multiple TRPs, the terminal may calculate and report at least two virtual PHRs according to the Pcmax of the terminal and the Pcmax,p corresponding to two panels.

The at least two virtual PHRs reported by the terminal may be two virtual PHRs corresponding to one panel of two panels through which the terminal assumes to corporately send the PUSCH. Alternatively, the at least two virtual PHRs reported by the terminal may be one virtual PHR corresponding to each panel of the above two panels.

Optionally, the terminal may calculate and report two virtual PHRs corresponding to one panel according to the Pcmax and the Pcmax,p corresponding to the panel of two panels.

The panel reported by the terminal may be a panel indicated by the network device, or may be a panel selected by the terminal, or may be a panel meeting a predefined rule, which is not limited in the present disclosure.

For example, if the terminal includes panel1 and panel2, and a transmit power p1 is obtained by using a transmission reference assumption of panel1 and a transmit power p2 is obtained by using a transmission reference assumption of panel2. Based on the Pcmax and the Pcmax,p1, the power headroom corresponding to panel1 may be calculated as PH1 and PH1', respectively. Based on the Pcmax and the Pcmax,p 1, the power headroom corresponding to panel2 may be calculated as PH2 and PH2', respectively. In a case of assuming a transmission reference for transmissions cooperatively sent by panel1 and panel2, if panel1 is assumed as a panel meeting the predefined rule, the terminal can report PH1 and PH1' to the network device.

Optionally, the terminal may respectively calculate and report a virtual PHR corresponding to each panel in two panels according to the Pcmax.

In other words, referring to the above examples, the terminal may report PH1 and PH2.

Optionally, the terminal may respectively calculate and report a virtual PHR corresponding to each panel in two panels according to the maximum transmit powers Pcmax,p corresponding respectively to two panels.

In other words, referring to the above examples, the terminal may report PH1' and PH2'.

Optionally, the terminal may calculate and report a virtual PHR corresponding to the terminal based on the Pcmax, and jointly calculate and report two PHRs corresponding to one panel of two panels based on the Pcmax in combination with the Pcmax,p corresponding to the panel.

For example, if the terminal includes panel1 and panel2, and a transmit power p1 is obtained by using a transmission reference assumption of panel1 and a transmit power p2 is obtained by using a transmission reference assumption of panel2. Based on the Pcmax and the Pcmax,p1, the power headroom corresponding to panel1 may be calculated as PH1 and PH1', respectively. Based on the Pcmax and the Pcmax,p 1, the power headroom corresponding to panel2 may be calculated as PH2 and PH2', respectively. In addition, the transmit power of the terminal is p3, and based on the Pcmax, the power headroom corresponding to the terminal may be calculated as PH3. In a case of assuming a transmission reference for transmissions cooperatively sent by panel1 and panel2, if panel1 is assumed as a panel indicated by the network device, the terminal can report PH1, PH1' and PH3.

Optionally, the terminal may jointly calculate and report two virtual PHRs corresponding to each panel of two panels based on the Pcmax and the maximum transmit powers Pcmax,p corresponding respectively to the two panels.

In other words, referring to the above examples, the terminal may report PH1, PH1', PH2 and PH2'.

Alternatively, the terminal may calculate and report a virtual PHR corresponding to the terminal based on the Pcmax, and jointly calculate and report two virtual PHRs corresponding to each panel of two panels based on the Pcmax in combination with the maximum transmit powers Pcmax,p corresponding respectively to the two panels.

In other words, referring to the above examples, the terminal may report PH1, PH1', PH2, PH2' and PH3.

It should be noted that in the above examples, the way for the terminal to jointly calculate at least virtual PHR based on the Pcmax and the Pcmax,p corresponding to each panel is merely an example, and should not be construed as limitations on the method of reporting the PHR by the terminal having multiple panels in the present disclosure.

In the present disclosure, for the specific explanation of the PHR, reference can be made to detailed descriptions of any embodiment of the disclosure, which will not be described again here.

Optionally, the PUSCH transmission sent by the terminal may be scheduled using a space division multiplexing (SDM) mode or a frequency division multiplexing (FDM) mode based on a single downlink control information (DCI) to implement an uplink simultaneous transmission (STxMP) from multiple panels towards multiple TRPs, and different beams are used to send the PUSCH from different panels. Therefore, when the PUSCH is scheduled based on a single DCI, a reference format of the virtual PHR can be determined based on transmission modes on different panels when one PUSCH is sent through the SDM or FDM transmission scheme based on the multiple panels or based on other predetermined reference signal transmission modes.

Optionally, the PUSCH transmission may be scheduled using a space division multiplexing (SDM) mode or a frequency division multiplexing (FDM) mode or a time division multiplexing (TDM) mode based on multiple DCIs to implement the transmission from multiple panels towards multiple TRPs, and different beams are used to send the PUSCH from different panels. Therefore, when the PUSCH is sent through cooperated transmission scheme and scheduled based on multiple DCIs, a reference format of the virtual PHR can be determined based on transmission modes on different panels when two PUSCHs are sent through the SDM, FDM or TDM transmission scheme based on the multiple panels or based on other predetermined reference signal transmission modes.

In the present disclosure, when the terminal has no PUSCH actually sent on the first sending time slot corresponding to the PUSCH for carrying the MAC CE PHR, the PUSCH is configured or scheduled for the STxMP, and the maximum power configuration of the terminal includes the Pcmax and the Pcmax,p corresponding to each panel, the terminal can jointly calculate and report at least one virtual PHR based on the Pcmax and the Pcmax,p. As a result, the network device can accurately schedule resources for each panel based on the PHR, thereby ensuring the reliability of uplink transmission.

Referring to FIG. 6, FIG. 6 is a flowchart of a power headroom reporting method based on a multi-panel transmission according to an embodiment of the present disclosure. The method is performed by a terminal having multiple panels. As illustrated in FIG. 6, the method may include, but not limited to, the following steps.

At step 601, second indication information sent by a network device is received. The second indication information is configured to indicate a PHR reporting mode.

In the present disclosure, the network device can indicate to the terminal the number of PHRs to be reported according to the terminal's capability to report the PHR. For example, assuming that the terminal may report 4 virtual PHRs, the network device can instruct the terminal to report 1 PHR, or to report 2 PHRs, or to report 3 PHRs, or to report 4 PHRs, or to report 5 PHRs.

At step 602, a virtual PHR is determined and reported according to a maximum power configuration of the terminal and the PHR reporting mode, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

Regarding the specific implementation of calculating and reporting the PHR by the terminal, reference can be made to detailed descriptions of any embodiment of the disclosure, which will not be described again here.

In the present disclosure, when the network device instructs the terminal to report one PHR, the terminal can calculate and report a virtual PHR corresponding to one panel. When the network device instructs the terminal to report two PHRs, the terminal can calculate and report virtual PHRs corresponding to two panels. When the network device instructs the terminal to report three PHRs, the terminal can calculate and report three PHRs based on the Pcmax of the terminal and the Pcmax,p corresponding to each panel. When the network device instructs the terminal to report four PHRs, the terminal can calculate and report four PHRs based on the Pcmax of the terminal and the Pcmax,p corresponding to each panel.

In the present disclosure, regarding the specific explanation of the maximum power configuration of the terminal and the method of determining and reporting the virtual PHR, reference can be made to detailed descriptions of any embodiment of the disclosure, which will not be described again here.

In the present disclosure, after the terminal receives the second indication information for indicating the PHR reporting mode sent by the network device, when the terminal has no PUSCH actually sent on the first sending time slot corresponding to the PUSCH for carrying the MAC CE PHR, and the PUSCH is configured or scheduled for the STxMP, the terminal determines and reports the virtual PHR according to the maximum power configuration of the terminal and the PHR reporting mode. As a result, the network device can accurately schedule resources for each panel based on the PHR, thereby ensuring the reliability of uplink transmission.

Referring to FIG. 7, FIG. 7 is a flowchart of a power headroom reporting method based on a multi-panel transmission according to an embodiment of the present disclosure. The method is performed by a network device. As illustrated in FIG. 7, the method may include, but not limited to, the following step.

**At** step 701, it is determined that a power headroom report (PHR) reported by a terminal is calculated according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

The first sending time slot corresponding to the PUSCH for carrying the MAC CE PHR may be a sending time slot having the smallest time domain position in various sending time slots corresponding to the PUSCH for carrying the MAC CE PHR that is determined according to downlink control information (DCI).

In the present disclosure, when the terminal performs uplink transmission, in order to ensure the reliability of uplink transmission, the terminal may report a PHR to the network device. When the terminal has no PUSCH actually sent, the PHR can be calculated and reported according to a virtual PH, i.e., reporting a virtual PHR. Therefore, the network device can determine the power headroom of the terminal based on the PHR, and accurately determine a bandwidth that the terminal can send and a transmission mode in combination with the coding and modulation scheme of the terminal, thereby ensuring the reliability of the uplink transmission.

The PHR may include a virtual PH and a PHR reference format and so on. The PH may be a virtual value calculated by the terminal based on the maximum transmit power and according to a predetermined PUSCH format. The PHR reference format may be used to indicate whether the reported PH value is determined based on an actual transmission or a reference format. For example, if a value of a filed for indicating the PHR reference format is set to 0, it indicates that the reported PH value is determined based on an actual transmission. If the value of the filed for indicating the PHR reference format is set to 1, it indicates that the reported PH value is determined based on a reference format. In this way, the network device may determine, according to the PHR reference format, whether the PH value is determined based on an actual transmission or a reference format.

Optionally, the terminal can calculate and report at least one virtual PHR based on the maximum transmit power Pcmax for the terminal and according to the virtual PH; or can calculate and report at least one virtual PHR based on the maximum transmit powers Pcmax,p for different panels and according to the virtual PH; or can calculate and report at least one virtual PHR based on the Pcmax and the Pcmax,p and according to the virtual PH, etc., which is not limited in the present disclosure.

Therefore, when the terminal has no PUSCH actually sent on the first sending time slot corresponding to the PUSCH for carrying the MAC CE PHR, and the PUSCH is configured or scheduled for the uplink simultaneous transmission of multiple panels, the network device may determine that the PHR reported by the terminal is calculated based on the maximum power configuration of the terminal and according to the virtual PH.

In the present disclosure, the maximum power configuration of the terminal may include the maximum transmit power Pcmax for the terminal, or may be the maximum transmit power Pcmax,p for each of different panels, or may include both the Pcmax and the Pcmax,p, which is not limited in the present disclosure.

Optionally, when the network device configures the maximum power configuration of the terminal as the maximum transmit power Pcmax for the terminal, it may be determined that the PHR reported by the terminal is at least one virtual PHR determined based on the Pcmax.

Optionally, when the network device configures the maximum power configuration of the terminal as the maximum transmit powers Pcmax,p corresponding to different panels, it may be determined that the PHR reported by the terminal is at least one virtual PHR determined based on the Pcmax,p corresponding to at least one panel. p is a positive integer less than or equal to N, N is a number of the multiple panels in the terminal.

Optionally, when the network device configures the maximum power configuration of the terminal as the maximum transmit power Pcmax for the terminal and the maximum transmit power Pcmax,p corresponding to each panel, it may be determined that the PHR reported by the terminal is at least one virtual PHR jointly determined based on the Pcmax and the Pcmax,p.

Optionally, the PUSCH transmission sent by the terminal may be scheduled using a space division multiplexing (SDM) mode or a frequency division multiplexing (FDM) mode based on a single downlink control information (DCI) to implement an uplink simultaneous transmission (STxMP) from multiple panels towards multiple TRPs, and different beams are used to send the PUSCH from different panels. Therefore, when the PUSCH is scheduled based on a single DCI, a reference format of the virtual PHR can be determined based on transmission modes on different panels when one PUSCH is sent through the SDM or FDM transmission scheme based on the multiple panels or based on other predetermined reference signal transmission modes.

Optionally, the PUSCH transmission may be scheduled using a space division multiplexing (SDM) mode or a frequency division multiplexing (FDM) mode or a time division multiplexing (TDM) mode based on multiple DCIs to implement the transmission from multiple panels towards multiple TRPs, and different beams are used to send the PUSCH from different panels. Therefore, when the PUSCH is sent through cooperated transmission scheme and scheduled based on multiple DCIs, a reference format of the virtual PHR can be determined based on transmission modes on different panels when two PUSCHs are sent through the SDM, FDM or TDM transmission scheme based on the multiple panels or based on other predetermined reference signal transmission modes.

In the present disclosure, when the terminal has no PUSCH actually sent on the first sending time slot corresponding to the PUSCH for carrying the MAC CE PHR, and the PUSCH is configured or scheduled for the uplink simultaneous transmission of multiple panels, the network device can determine that the PHR reported by the terminal is calculated according to the virtual PH and based on the maximum power configuration of the terminal. Therefore, the network device can accurately schedule resources for each panel based on the PHR, thereby ensuring the reliability of uplink transmission.

Referring to FIG. 8, FIG. 8 is a flowchart of a power headroom reporting method based on a multi-panel transmission according to an embodiment of the present disclosure. The method is performed by a network device. As illustrated in FIG. 8, the method may include, but not limited to, the following step.

At step 801, first indication information is sent to a terminal. The first indication information is configured to indicate an identifier of a panel corresponding to a virtual PHR to be reported.

The identifier of the panel may be any information that may uniquely determine the panel, such as a panel number, which is not limited in the present disclosure.

At step 802, it is determined that a power headroom report (PHR) reported by a terminal is a virtual PHR of a specified panel calculated according to a maximum transmit power Pcmax for the terminal, in response to the terminal having no physical uplink shared channel (PUSCH) actually sent on a first sending time slot corresponding to the PUSCH for carrying a media access control control unit (MAC CE) PHR, the PUSCH being configured or scheduled for an uplink simultaneous transmission of multiple panels (STxMP), and a maximum power configuration of the terminal being the Pcmax.

In the present disclosure, after the network device sends the first indication information to the terminal, when the network device configures the maximum transmit power Pcmax for the terminal, the PUSCH is configured or scheduled for the STxMP, and there is no PUSCH actually sent, the terminal may calculate the virtual PHR corresponding to the panel indicated by the first indication information sent by the network device based on the Pcmax and a power allocation rule.

Therefore, when the terminal has no PUSCH actually sent on the first sending time slot corresponding to the PUSCH for carrying the MAC CE PHR, the PUSCH is configured or scheduled for the STxMP, and the maximum power configuration of the terminal is the maximum transmit power Pcmax for the terminal, the network device may determine that the PHR reported by the terminal is at least one virtual PHR determined based on the Pcmax.

In the present disclosure, for the specific explanation of the PHR, reference can be made to detailed descriptions of any embodiment of the disclosure, which will not be described again here.

**In** the present disclosure, after the network device sends the first indication information for indicating the identifier of the panel corresponding to the virtual PHR to be reported to the terminal, when the terminal has no PUSCH actually sent on the first sending time slot corresponding to the PUSCH for carrying the MAC CE PHR, the PUSCH is configured or scheduled for the STxMP, and the maximum power configuration of the terminal is the maximum transmit power Pcmax for the terminal, the network device may determine that the PHR reported by the terminal is the virtual PHR of the specified panel calculated based on the Pcmax. As a result, the network device can accurately schedule resources for each panel based on the PHR, thereby ensuring the reliability of uplink transmission.

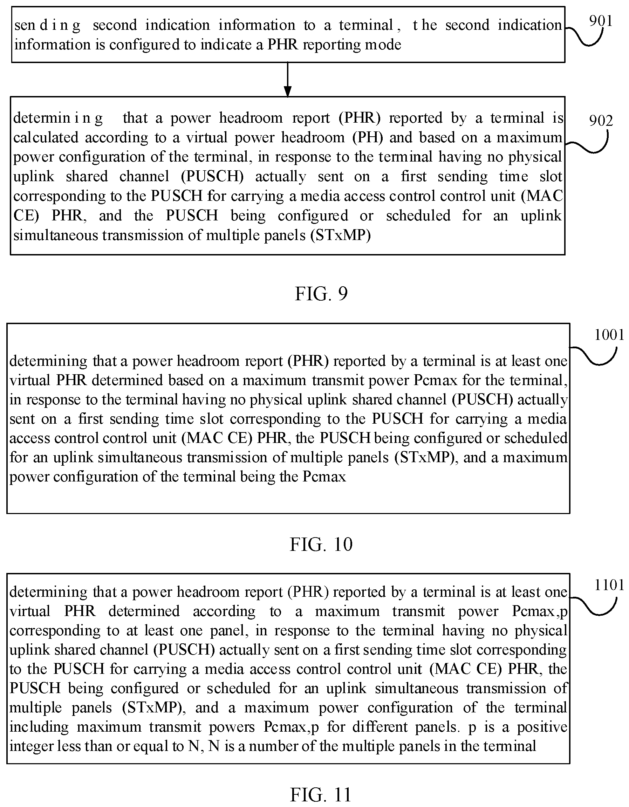

Referring to FIG. 9, FIG. 9 is a flowchart of a power headroom reporting method based on a multi-panel transmission according to an embodiment of the present disclosure. The method is performed by a network device. As illustrated in FIG. 9, the method may include, but not limited to, the following step.

At step 901, second indication information is sent to a terminal. The second indication information is configured to indicate a PHR reporting mode.

In the present disclosure, the network device can indicate to the terminal the number of PHRs to be reported according to the terminal's capability to report the PHR. For example, assuming that the terminal may report 4 virtual PHRs, the network device can instruct the terminal to report 1 PHR, or to report 2 PHRs, or to report 3 PHRs, or to report 4 PHRs, or to report 5 PHRs. In this way, the terminal may determine the virtual PHR according to the maximum power configuration of the terminal and the PHR reporting mode.

For example, when the network device instructs the terminal to report one PHR, the terminal can calculate and report a virtual PHR corresponding to one panel. When the network device instructs the terminal to report two PHRs, the terminal can calculate and report virtual PHRs corresponding to two panels. When the network device instructs the terminal to report three PHRs, the terminal can calculate and report three PHRs based on the Pcmax of the terminal and the Pcmax,p corresponding to each panel. When the network device instructs the terminal to report four PHRs, the terminal can calculate and report four PHRs based on the Pcmax of the terminal and the Pcmax,p corresponding to each panel.

In the present disclosure, regarding the specific explanation of the PHR and the method of calculating the PHR by the terminal, reference can be made to detailed descriptions of any embodiment of the disclosure, which will not be described again here.

At step 902, it is determined that a power headroom report (PHR) reported by a terminal is calculated according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

In the present disclosure, regarding a specific process of the step 9, reference can be made to detailed descriptions of any embodiment of the disclosure, which will not be described again here.

In the present disclosure, after the network device sends the second indication information for instructing the PHR reporting mode to the terminal, when the terminal has no PUSCH actually sent on the first sending time slot corresponding to the PUSCH for carrying the MAC CE PHR, and the PUSCH is configured or scheduled for the uplink simultaneous transmission of multiple panels, the network device can determine that the PHR reported by the terminal is calculated according to the virtual PH and based on the maximum power configuration of the terminal. Therefore, the network device can accurately schedule resources for each panel based on the PHR, thereby ensuring the reliability of uplink transmission.

Referring to FIG. 10, FIG. 10 is a flowchart of a power headroom reporting method based on a multi-panel transmission according to an embodiment of the present disclosure. The method is performed by a network device. As illustrated in FIG. 10, the method may include, but not limited to, the following step.

At step 1001, it is determined that a power headroom report (PHR) reported by a terminal is at least one virtual PHR determined based on a maximum transmit power Pcmax for the terminal, in response to the terminal having no physical uplink shared channel (PUSCH) actually sent on a first sending time slot corresponding to the PUSCH for carrying a media access control control unit (MAC CE) PHR, the PUSCH being configured or scheduled for an uplink simultaneous transmission of multiple panels (STxMP), and a maximum power configuration of the terminal being the Pcmax.

In the present disclosure, when the maximum power configuration of the terminal includes the maximum transmit power Pcmax for the terminal, the PUSCH is configured or scheduled for the STxMP, and there is no PUSCH actually sent, the terminal can perform allocation of the Pcmax according to a preset power allocation rule, to determine a maximum transmit power corresponding to each panel of the terminal, and determine the virtual PHR corresponding to each panel according to the maximum transmit power corresponding to each panel.

Optionally, the network device may determine that the PHR reported by the terminal is a virtual PHR corresponding to at least one panel calculated by the terminal according to the Pcmax of the terminal and based on the power allocation rule and a transmission reference assumption for a PUSCH transmission from one panel of the multiple panels towards a single TRP. The PHR is associated with a transmission occasion corresponding to a PUSCH transmission reference assumption on the panel for which the virtual PHR is calculated.

Optionally, the network device may determine that the PHR reported by the terminal is a virtual PHR corresponding to a specified panel calculated by the terminal according to the Pcmax and based on the power allocation rule and a transmission reference assumption for a PUSCH transmission from one panel of the multiple panels towards a single TRP. The PHR is associated with a transmission occasion corresponding to a PUSCH transmission reference assumption on the panel for which the virtual PHR is calculated.

Optionally, the network device may determine that the PHR reported by the terminal is a virtual PHR corresponding to a predefined panel calculated by the terminal according to the Pcmax and the power allocation rule.

Optionally, the network device may determine that the PHR reported by the terminal is a virtual PHR corresponding to a panel indicated by first indication information sent by the network device calculated by the terminal according to the Pcmax and the power allocation rule.

Optionally, the network device may determine that the PHR reported by the terminal is a virtual PHR corresponding to a panel selected by terminal calculated by the terminal according to the Pcmax and the power allocation rule.

Optionally, the network device may determine that the PHR reported by the terminal is a virtual PHR corresponding to a panel under a predefined rule calculated by the terminal according to the Pcmax and the power allocation rule. For example, the network device may determine that the PHR reported by the terminal is a PHR corresponding to the panel with the smallest maximum transmit power in the multiple panels of the terminal calculated by the terminal according to the Pcmax and the power allocation rule.

Optionally, the network device may determine that the PHR reported by the terminal includes virtual PHRs corresponding respectively to two panels calculated by the terminal according to the Pcmax and the power allocation rule. The two panels are panels determined by the terminal for uplink transmission.

In the present disclosure, for the specific explanation of the PHR and the specific method for the terminal to calculate each panel according to the power allocation rule, reference can be made to detailed descriptions of any embodiment of the disclosure, which will not be described again here.

In the present disclosure, when the terminal has no PUSCH actually sent on the first sending time slot corresponding to the PUSCH for carrying the MAC CE PHR, the PUSCH is configured or scheduled for the STxMP, and the maximum power configuration of the terminal includes the Pcmax, the network device determines that the PHR reported by the terminal is at least one virtual PHR determined based on the Pcmax. As a result, the network device can accurately schedule resources for each panel based on the PHR, thereby ensuring the reliability of uplink transmission.

Referring to FIG. 11, FIG. 11 is a flowchart of a power headroom reporting method based on a multi-panel transmission according to an embodiment of the present disclosure. The method is performed by a network device. As illustrated in FIG. 11, the method may include, but not limited to, the following steps.

At step 1101, it is determined that a power headroom report (PHR) reported by a terminal is at least one virtual PHR determined according to a maximum transmit power Pcmax,p corresponding to at least one panel, in response to the terminal having no physical uplink shared channel (PUSCH) actually sent on a first sending time slot corresponding to the PUSCH for carrying a media access control control unit (MAC CE) PHR, the PUSCH being configured or scheduled for an uplink simultaneous transmission of multiple panels (STxMP), and a maximum power configuration of the terminal including maximum transmit powers Pcmax,p for different panels. p is a positive integer less than or equal to N, N is a number of the multiple panels in the terminal.

In the present disclosure, when the terminal has no PUSCH actually sent on the first sending time slot corresponding to the PUSCH for carrying the MAC CE PHR, the PUSCH is configured or scheduled for the STxMP, and the maximum power configuration of the terminal including maximum transmit powers Pcmax,p for different panels, the network device may determine that the PHR reported by the terminal is the virtual PHR corresponding to at least one panel calculated and reported by the terminal according to the Pcmax,p corresponding to the at least one panel and based on a transmission reference assumption for a PUSCH transmission from one panel of multiple panels towards a single TRP.

Optionally, the network device may determine that the PHR reported by the terminal is a virtual PHR of a specified panel calculated and reported by the terminal according to a Pcmax,p corresponding to the specified panel and based on a transmission reference assumption for a PUSCH transmission from one panel of multiple panels towards a single TRP. The specified panel may be predefined, or indicated by the network device, which is not limited herein.

Optionally, the network device may determine that the PHR reported by the terminal is a virtual PHR of a corresponding panel calculated and reported by the terminal according to a Pcmax,p under a predefined rule and based on a transmission reference assumption for a PUSCH transmission from one panel of multiple panels towards a single TRP. For example, the network device may determine that the PHR reported by the terminal is the PHR corresponding to the panel with the smallest maximum transmit power in multiple panels of the terminal calculated according to the Pcmax,p under the predefined rule.

Optionally, the network device may determine that the PHR reported by the terminal includes a virtual PHR corresponding to one panel reported by the terminal from two virtual PHRs of two panels calculated respectively by the terminal according to a Pcmax,p corresponding to a selected panel and based on a transmission reference assumption for a PUSCH transmission from one panel of multiple panels towards a single TRP. For example, the network device may determine that the PHR reported by the terminal is the PHR with a smaller PH value corresponding to the two panels.

Optionally, the network device may determine that the PHR reported by the terminal includes two virtual PHRs of two panels respectively calculated and reported by the terminal according to two maximum transmit powers Pcmax,p corresponding respectively to the two panels and based on a transmission reference assumption for a PUSCH transmission from one panel of multiple panels towards a single TRP.

Optionally, when the terminal has no PUSCH actually sent on the first sending time slot corresponding to the PUSCH for carrying the MAC CE PHR, the PUSCH is configured or scheduled for the STxMP, and the maximum power configuration of the terminal includes the maximum transmit powers Pcmax,p corresponding to different panels, the network device can determine that the PHR reported by the terminal is the virtual PHR corresponding to at least one panel calculated and reported by the terminal according to the Pcmax,p corresponding to at least one panel and based on a transmission reference assumption for a PUSCH transmission from one panel of multiple panels towards a single TRP. The PHR is associated with a transmission occasion corresponding to a PUSCH transmission reference assumption on the panel for which the PHR is calculated.

In the present disclosure, for the specific explanation of the PHR, reference can be made to detailed descriptions of any embodiment of the disclosure, which will not be described again here.

In the present disclosure, when the terminal has no PUSCH actually sent on the first sending time slot corresponding to the PUSCH for carrying the MAC CE PHR, the PUSCH is configured or scheduled for the STxMP, and the maximum power configuration of the terminal includes the maximum transmit powers Pcmax,p for different panels, the network device determines that the PHR reported by the terminal is at least one virtual PHR determined based on the maximum transmit power Pcmax,p corresponding to at least one panel. As a result, the network device can accurately schedule resources for each panel based on the PHR, thereby ensuring the reliability of uplink transmission.

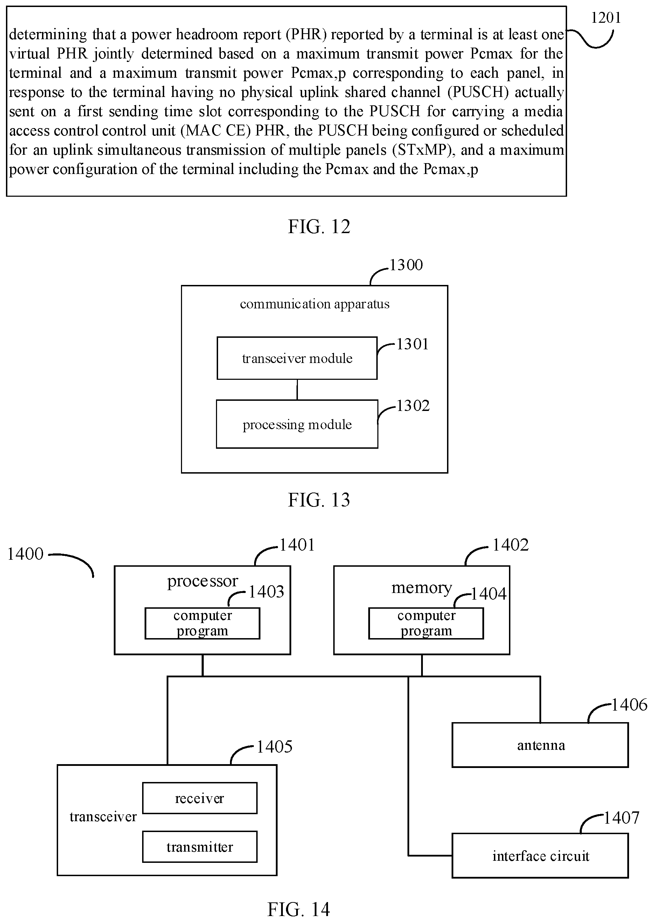

Referring to FIG. 12, FIG. 12 is a flowchart of a power headroom reporting method based on a multi-panel transmission according to an embodiment of the present disclosure. The method is performed by a network device. As illustrated in FIG. 12, the method may include, but not limited to, the following steps.

At step 1201, it is determined that a power headroom report (PHR) reported by a terminal is at least one virtual PHR jointly determined based on a maximum transmit power Pcmax for the terminal and a maximum transmit power Pcmax,p corresponding to each panel, in response to the terminal having no physical uplink shared channel (PUSCH) actually sent on a first sending time slot corresponding to the PUSCH for carrying a media access control control unit (MAC CE) PHR, the PUSCH being configured or scheduled for an uplink simultaneous transmission of multiple panels (STxMP), and a maximum power configuration of the terminal including the Pcmax and the Pcmax,p.

Optionally, the network device may determine that the PHR reported by the terminal is at least one virtual PHR corresponding to one panel calculated by the terminal according to the Pcmax and the Pcmax,p, and based on a transmission reference assumption for a PUSCH transmission from one panel of the multiple panels towards a single TRP.

In other words, the network device may determine that the at least one virtual PHR reported by the terminal is at least one virtual PHR corresponding to one panel under a reference assumption. The panel under the reference assumption may be indicated by the network device, or may be selected by the terminal, or may be the panel under a predefined rule, for example the panel corresponding to the smallest SRS ID, which is not limited in the present disclosure.

Optionally, if the terminal reports one virtual PHR, the network device may determine that the PHR is calculated by the terminal based on the Pcmax. Alternatively, if the terminal reports one virtual PHR, the network device may determine that the PHR is calculated by the terminal based on the Pcmax,p corresponding to the panel. Alternatively, if the terminal reports two virtual PHRs, the network device may determine that the two PHRs are calculated by the terminal based on the Pcmax and the Pcmax,p corresponding to the panel.

Regarding a specific process that the terminal calculates and selects the reported PHR, reference can be made to detailed descriptions of any embodiment of the disclosure, which will not be described again here.

Optionally, the network device may determine that the PHR reported by the terminal includes at least two virtual PHRs calculated by the terminal according to the Pcmax and the Pcmax,p corresponding to each panel, and based on a transmission reference assumption for cooperated PUSCH transmissions from two panels of the multiple panels towards multiple TRPs.

For example, if the terminal reports two virtual PHRs, the network device may determine that the two PHRs are calculated respectively by the terminal based on the Pcmax and the Pcmax,p corresponding to the panel of the two panels.

Alternatively, if the terminal reports two virtual PHRs, the network device may determine that the two PHRs include the virtual PHR corresponding to each panel in two panels calculated by the terminal based on the Pcmax.

Alternatively, if the terminal reports two virtual PHRs, the network device may determine that the two PHRs include the virtual PHR corresponding to each panel in two panels calculated by the terminal based on the maximum transmit powers Pcmax,p corresponding respectively to the two panels.

Alternatively, if the terminal reports three virtual PHRs, the network device may determine that the three PHRs include a virtual PHR corresponding to the terminal calculated by the terminal based on the Pcmax and two virtual PHRs corresponding to a panel in two panels jointly calculated by the terminal based on the Pcmax in combination with the Pcmax,p corresponding to the panel.

Alternatively, if the terminal reports four virtual PHRs, the network device may determine that the four PHRs include two virtual PHRs corresponding to each panel in two panels jointly calculated by the terminal based on the Pcmax and the maximum transmit powers Pcmax,p corresponding respectively to the two panels.

Alternatively, if the terminal reports five virtual PHRs, the network device may determine that the five PHRs include a virtual PHR corresponding to the terminal calculated by the terminal based on the Pcmax and two virtual PHRs corresponding to each panel in two panels jointly calculated by the terminal based on the Pcmax in combination with the maximum transmit powers Pcmax,p corresponding respectively to the two panels.

Regarding a specific process that the terminal calculates and reports the virtual PHR based on the Pcmax and/or the Pcmax,p, reference can be made to detailed descriptions of any embodiment of the disclosure, which will not be described again here.

In the present disclosure, for the specific explanation of the PHR, reference can be made to detailed descriptions of any embodiment of the disclosure, which will not be described again here.

In the present disclosure, when the terminal has no PUSCH actually sent on the first sending time slot corresponding to the PUSCH for carrying the MAC CE PHR, the PUSCH is configured or scheduled for the STxMP, and the maximum power configuration of the terminal is the maximum transmit power Pcmax for the terminal and the maximum transmit power Pcmax,p corresponding to each panel, the network device determines that the PHR reported by the terminal is at least one virtual PHR jointly calculated based on the Pcmax and the Pcmax,p. As a result, the network device can accurately schedule resources for each panel based on the PHR, thereby ensuring the reliability of uplink transmission.

FIG. 13 is a block diagram of a communication apparatus according to an embodiment of the present disclosure. The communication apparatus 130 shown in FIG. 13 may include a processing module 1301 and a transceiver module 1302.

It can be understood that the communication apparatus 1300 may be a terminal having multiple panels, or an apparatus in the terminal having multiple panels, or an apparatus that can be used in conjunction with the terminal having multiple panels. Alternatively, the communication apparatus 1300 may be a network device, an apparatus in the network device, or an apparatus that can be used in conjunction with the network device.

Optionally, the communication apparatus 1300, on the side of the terminal having multiple panels, includes: the processing module 1301, configured to calculate and report a power headroom report (PHR) according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

Optionally, the processing module 1301 is configured to:
calculate and report at least one virtual PHR based on a maximum transmit power Pcmax for the terminal, in response to the maximum power configuration of the terminal including the Pcmax; or
calculate and report at least one virtual PHR based on a maximum transmit power Pcmax,p corresponding to at least one panel, in response to the maximum power configuration of the terminal including a maximum transmit power Pcmax,p corresponding to each of different panels, where p is a positive integer less than or equal to N, N is a number of the multiple panels in the terminal; or
jointly calculate and report at least one virtual PHR based on a maximum transmit power Pcmax for the terminal and a maximum transmit power Pcmax,p corresponding to each panel, in response to the maximum power configuration of the terminal including the Pcmax and the Pcmax,p corresponding to each panel.

Optionally, the processing module 1301 is configured to:
calculate and report a virtual PHR corresponding to at least one panel according to a power allocation rule and based on the Pcmax and a transmission reference assumption for a PUSCH transmission from one panel of the terminal towards a single transmission reception point (TRP), in which the virtual PHR is associated with a transmission occasion corresponding to a PUSCH transmission reference assumption on the at least one panel for which the virtual PHR is calculated; or
calculate and report virtual PHRs corresponding respectively to two panels according to a power allocation rule and based on the Pcmax and a transmission reference assumption for cooperated PUSCH transmissions from two panels of the terminal towards multiple TRPs respectively, in which each of the virtual PHRs is associated with a transmission occasion corresponding to a PUSCH transmission reference assumption on a panel for which the virtual PHR is calculated.

Optionally, the processing module 1301 is configured to:
calculate and report a virtual PHR corresponding to a predefined panel according to the power allocation rule and based on the Pcmax; or
calculate and report a virtual PHR corresponding to a panel indicated by first indication information sent by a network device according to the power allocation rule and based on the Pcmax; or
calculate and report a virtual PHR corresponding to a panel selected by the terminal according to the power allocation rule and based on the Pcmax; or
calculate and report a virtual PHR corresponding to a panel under a predefined rule according to the power allocation rule and based on the Pcmax; or
calculate and report virtual PHRs corresponding respectively to two panels according to the power allocation rule and based on the Pcmax.

Optionally, the processing module 1301 is configured to:
calculate and report a virtual PHR corresponding to the at least one panel according to the Pcmax,p corresponding to the at least one panel and based on a transmission reference assumption for a PUSCH transmission from one panel of the terminal towards a single TRP, in which the virtual PHR is associated with a transmission occasion corresponding to a PUSCH transmission reference assumption on the at least one panel for which the virtual PHR is calculated;or
calculate and reportvirtual PHRs corresponding respectively to two panels according to the maximum transmit powers Pcmax,p corresponding respectively to the two panels and based on a transmission reference assumption for cooperated PUSCH transmissions from the two panels of the terminal towards multiple TRPs respectively, in which each of the virtual PHRs is associated with a transmission occasion corresponding to a PUSCH transmission reference assumption on a panel for which the virtual PHR is calculated.

Optionally, the processing module 1301 is configured to:
calculating and reporting a virtual PHR of a specified panel according to the Pcmax,p corresponding to the specified panel; or
calculating and reporting a virtual PHR of a corresponding panel according to the Pcmax,p under a predefined rule; or
calculating two virtual PHRs of two panels respectively and reporting a virtual PHR corresponding to a panel, according to the maximum transmit powers Pcmax,p corresponding respectively to selected panels; or
calculating and reporting two virtual PHRs of two panels respectively according to two maximum transmit powers Pcmax,p corresponding respectively to the two panels.

Optionally, the processing module 1301 is configured to:
calculating and reporting the at least one virtual PHR corresponding to a panel according to the Pcmax and the Pcmax,p corresponding to the panel and based on a transmission reference assumption for a PUSCH transmission from the panel of the terminal towards a single TRP; or
calculating and reporting at least two virtual PHRs according to the Pcmax and the maximum transmit powers Pcmax,p corresponding respectively to the two panels and based on a transmission reference assumption for cooperated PUSCH transmissions from the two panels of the terminal towards multiple TRPs respectively.

Optionally, the processing module 1301 is configured to:
calculating and reporting a virtual PHR corresponding to the panel according to the Pcmax; or
calculating and reporting a virtual PHR corresponding to the panel according to the Pcmax,p corresponding to the panel; or
calculating and reporting two virtual PHRs corresponding to the panel according to the Pcmax and the Pcmax,p corresponding the panel.

Optionally, the processing module 1301 is configured to:
respectively calculating and reporting two virtual PHRs corresponding to a panel of the two panels according to the Pcmax and the Pcmax,p corresponding to the panel; or
respectively calculating and reporting a virtual PHR corresponding to each panel of the two panels according to the Pcmax; or
respectively calculating and reporting a virtual PHR corresponding to each panel of the two panels according to the maximum transmit powers Pcmax,p corresponding respectively to the two panels; or
calculating and reporting a virtual PHR corresponding to the terminal based on the Pcmax, and jointly calculating and reporting two virtual PHRs corresponding to a panel of the two panels according to the Pcmax and the Pcmax,p corresponding to the panel; or
jointly calculating and reporting two virtual PHRs corresponding to each panel of the two panels according to the Pcmax and the maximum transmit powers Pcmax,p corresponding respectively to the two panels; or
calculating and reporting a virtual PHR corresponding to the terminal based on the Pcmax, and jointly calculating and reporting two virtual PHRs corresponding to each panel of the two panels according to the Pcmax and the maximum transmit powers Pcmax,p corresponding respectively to the two panels.

Optionally, the communication apparatus further includes the transceiver module 1302, configured to receive second indication information sent by a network device, in which the second indication information is configured to indicate a PHR reporting mode.

The processing module 1302 is configured to determine the virtual PHR according to the maximum power configuration of the terminal and the PHR reporting mode.

Optionally, the PHR reporting mode includes at least one of: reporting one PHR, reporting two PHRs, reporting three PHRs, reporting four PHRs, or reporting five PHRs.

Optionally, the processing module 1301 is configured to:
determining a virtual PHR reference format according to transmission modes on different panels in a case where one PUSCH is sent simultaneously by multiple panels using a space division multiplexing (SDM) or frequency division multiplexing (FDM) transmission scheme, in response to the PUSCH being scheduled based on single downlink control information (DCI); or
determining a virtual PHR reference format according to PUSCH transmission modes on different panels in a case where two PUSCHs are sent by multiple panels using a space division multiplexing (SDM), frequency division multiplexing (FDM) or a time division multiplexing (TDM) transmission scheme, in response to the PUSCH being scheduled based on multiple DCIs.

In the present disclosure, in a case where the terminal has no PUSCH actually sent on the first transmission time slot corresponding to the PUSCH for carrying the MACCE PHR, and the PUSCH is configured or scheduled for the STxMP, the terminal can calculate and report the PHR according to the virtual PH and based on the maximum power configuration of the terminal. Therefore, the network device can accurately schedule resources for each panel based on the PHR, thereby ensuring the reliability of uplink transmission.

Optionally, the communication apparatus 1300, on the side of the network device, includes: the processing module 1301, configured to determine that a power headroom report (PHR) reported by a terminal is calculated according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

Optionally, the processing module 1301 is configured to:
determine that the PHR reported by the terminal is at least one virtual PHR determined based on a maximum transmit power Pcmax for the terminal, in response to the maximum power configuration of the terminal including the Pcmax; or
determine that the PHR reported by the terminal is at least one virtual PHR determined based on a maximum transmit power Pcmax,p corresponding to at least one panel, in response to the maximum power configuration of the terminal including a maximum transmit power Pcmax,p corresponding to each of different panels, where p is a positive integer less than or equal to N, N is a number of the multiple panels in the terminal; or
determine that the PHR reported by the terminal is at least one virtual PHR determined based on a maximum transmit power Pcmax for the terminal and a maximum transmit power Pcmax,p corresponding to each panel, in response to the maximum power configuration of the terminal including the Pcmax and the Pcmax,p corresponding to each panel.

Optionally, the processing module 1301 is configured to:
determine that the PHR reported by the terminal is a virtual PHR corresponding to at least one panel calculated by the terminal according to a power allocation rule and based on the Pcmax and a transmission reference assumption for a PUSCH transmission from one panel of multiple panels towards a single transmission reception point (TRP), in which the virtual PHR is associated with a transmission occasion corresponding to a PUSCH transmission reference assumption on the at least one panel for which the virtual PHR is calculated; or
determine that the PHR reported by the terminal includes virtual PHRs corresponding respectively to two panels calculated by the terminal according to a power allocation rule and based on the Pcmax and a transmission reference assumption for cooperated PUSCH transmissions from two panels of multiple panels towards multiple TRPs respectively, in which each of the virtual PHRs is associated with a transmission occasion corresponding to a PUSCH transmission reference assumption on a panel for which the virtual PHR is calculated.

Optionally, the processing module 1301 is configured to:
determine that the PHR reported by the terminal is a virtual PHR corresponding to a predefined panel calculated by the terminal according to the power allocation rule and based on the Pcmax; or
determine that the PHR reported by the terminal is a virtual PHR corresponding to a panel indicated by first indication information sent by a network device calculated by the terminal according to the power allocation rule and based on the Pcmax; or
determine that the PHR reported by the terminal is a virtual PHR corresponding to a panel selected by the terminal calculated by the terminal according to the power allocation rule and based on the Pcmax; or
determine that the PHR reported by the terminal is a virtual PHR corresponding to a panel under a predefined rule calculated by the terminal according to the power allocation rule and based on the Pcmax; or
determine that the PHR reported by the terminal includes virtual PHRs corresponding respectively to two panels calculated by the terminal according to the power allocation rule and based on the Pcmax.

Optionally, the processing module 1301 is configured to:
determine that the PHR reported by the terminal is a virtual PHR corresponding to the at least one panel calculated by the terminal according to the Pcmax,p corresponding to the at least one panel and based on a transmission reference assumption for a PUSCH transmission from one panel of multiple panels towards a single TRP, in which the virtual PHR is associated with a transmission occasion corresponding to a PUSCH transmission reference assumption on the at least one panel for which the virtual PHR is calculated; or
determine that the PHR reported by the terminal includes virtual PHRs corresponding respectively to two panels calculated by the terminal according to the maximum transmit powers Pcmax,p corresponding respectively to the two panels and based on a transmission reference assumption for cooperated PUSCH transmissions from the two panels of multiple panels towards multiple TRPs respectively, in which each of the virtual PHRs is associated with a transmission occasion corresponding to a PUSCH transmission reference assumption on a panel for which the virtual PHR is calculated.

Optionally, the processing module 1301 is configured to:
calculate and report a virtual PHR of a specified panel according to the Pcmax,p corresponding to the specified panel; or
calculate and report a virtual PHR of a corresponding panel according to the Pcmax,p under a predefined rule; or
calculate two virtual PHRs of two panels respectively and report a virtual PHR corresponding to a panel, according to the maximum transmit powers Pcmax,p corresponding respectively to selected panels; or
calculate and report two virtual PHRs of two panels respectively according to two maximum transmit powers Pcmax,p corresponding respectively to the two panels.

Optionally, the processing module 1301 is configured to:
determine that the PHR reported by the terminal is the at least one virtual PHR corresponding to a panel calculated by the terminal according to the Pcmax and the Pcmax,p corresponding to the panel and based on a transmission reference assumption for a PUSCH transmission from the panel of multiple panels towards a single TRP; or
determine that the PHR reported by the terminal includes at least two virtual PHRs calculated by the terminal according to the Pcmax and the maximum transmit powers Pcmax,p corresponding respectively to the two panels and based on a transmission reference assumption for cooperated PUSCH transmissions from the two panels of multiple panels towards multiple TRPs respectively.

Optionally, the processing module 1301 is configured to:
in response to the terminal reporting a virtual PHR, determine that the virtual PHR is calculated by the terminal according to the Pcmax; or
in response to the terminal reporting a virtual PHR, determine that the virtual PHR is a virtual PHR calculated by the terminal according to the Pcmax,p corresponding to the panel; or
in response to the terminal reporting two virtual PHRs, determine that the two virtual PHRs include two virtual PHRs calculated by the terminal according to the Pcmax and the Pcmax,p corresponding the panel.

Optionally, the processing module 1301 is configured to:
in response to the terminal reporting two virtual PHRs, determine that the two virtual PHRs are respectively calculated by the terminal according to the Pcmax and the Pcmax,p corresponding to a panel of the two panels; or
in response to the terminal reporting two virtual PHRs, determine that the two virtual PHRs include a virtual PHR corresponding to each panel of the two panels respectively calculated by the terminal according to the Pcmax; or
in response to the terminal reporting two virtual PHRs, determine that the two virtual PHRs include a virtual PHR corresponding to each panel of the two panels respectively calculated by the terminal according to the maximum transmit powers Pcmax,p corresponding respectively to the two panels; or
in response to the terminal reporting three virtual PHRs, determine that the three virtual PHRs include a virtual PHR corresponding to the terminal calculated by the terminal based on the Pcmax and two virtual PHRs corresponding to a panel of the two panels jointly calculated by the terminal according to the Pcmax and the Pcmax,p corresponding to the panel; or
in response to the terminal reporting four virtual PHRs, determine that the four virtual PHRs include two virtual PHRs corresponding to each panel of the two panels jointly calculated by the terminal according to the Pcmax and the maximum transmit powers Pcmax,p corresponding respectively to the two panels; or
in response to the terminal reporting five virtual PHRs, determine that the five virtual PHRs include a virtual PHR corresponding to the terminal calculated by the terminal based on the Pcmax and two virtual PHRs corresponding to each panel of the two panels jointly calculated by the terminal according to the Pcmax and the maximum transmit powers Pcmax,p corresponding respectively to the two panels.

Optionally, the communication apparatus further includes the transceiver module 1302, configured to send second indication information to the terminal, in which the second indication information is configured to indicate a PHR reporting mode.

Optionally, the PHR reporting mode includes at least one of: reporting one PHR, reporting two PHRs, reporting three PHRs, reporting four PHRs, or reporting five PHRs.

Optionally, the processing module is configured to:
determine that the terminal determines a virtual PHR reference format according to transmission modes on different panels in a case where one PUSCH is sent simultaneously by multiple panels using a space division multiplexing (SDM) or frequency division multiplexing (FDM) transmission scheme, in response to the PUSCH being scheduled based on single downlink control information (DCI); or
determine that the terminal determines a virtual PHR reference format according to PUSCH transmission modes on different panels in a case where two PUSCHs are sent by multiple panels using a space division multiplexing (SDM), frequency division multiplexing (FDM) or a time division multiplexing (TDM) transmission scheme, in response to the PUSCH being scheduled based on multiple DCIs.

In the present disclosure, after the network device sends the second indication information for instructing the PHR reporting mode to the terminal, when the terminal has no PUSCH actually sent on the first sending time slot corresponding to the PUSCH for carrying the MAC CE PHR, and the PUSCH is configured or scheduled for the uplink simultaneous transmission of multiple panels, the network device can determine that the PHR reported by the terminal is calculated according to the virtual PH and based on the maximum power configuration of the terminal. Therefore, the network device can accurately schedule resources for each panel based on the PHR, thereby ensuring the reliability of uplink transmission.

FIG. 14 is another block diagram of a communication apparatus 1400 according to an embodiment of the present disclosure. The communication apparatus 1400 may be a terminal having multiple panels, a network device, a chip, a chip system, a processor, etc. that supports the terminal having multiple panels to implement the method, or a chip, a chip system, a processor, etc. that supports the network device to implement the method. The apparatus may be used to implement the method in the above method embodiments. For details, please refer to the above method embodiments.

The communication apparatus 1400 may include one or more processors 1401. The processor 1401 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 1400 may also include one or more memories 1402 for storing the computer program 1404. The processor 1401 executes the computer program 1404, to cause the communication apparatus 1400 to implement the method in the above method embodiments. Optionally, the memory 1402 may also store data. The communication apparatus 1400 and the memory 1402 may be set up separately or integrated together.

Optionally, the communication apparatus 1400 may also include a transceiver 1405 and an antenna 1406. The transceiver 1405 may be called a transceiver unit, a transceiver machine, or a transceiver circuit, etc., to implement the receiving and sending function. The transceiver 1405 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 1400 may also include one or more interface circuits 14107. The interface circuit 1407 is used to receive code instructions and transmit the code instructions to the processor 1401. The processor 1401 runs the code instructions to cause the communication apparatus 1400 to implement the method in the above method embodiment.

The communication apparatus 1400 is the terminal having multiple panels. The processor 1401 is configured to execute the step 201 in FIG. 2, the step 301 in FIG. 3, the step 401 in FIG. 4, the step 501 in FIG. 5, the step 602 in FIG. 6. The transceiver 1405 is configured to execute the step 601 in FIG. 6 or the like.

The communication apparatus 1400 is the network device. The transceiver 1405 is configured to execute the step 801 in FIG. 8, and the step 9019 in FIG. 9 or the like.

In one implementation, the processor 1401 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 1401 may store a computer program 1403. When the computer program 1403 is running on the processor 1401, the communication apparatus 140 is caused to implement the method in the above method embodiments. The computer program 1403 may be solidified in the processor 1401, in which case the processor 1401 may be implemented in hardware.

In an implementation, the communication apparatus 140 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a remote terminal, but the scope of the communication apparatus in the disclosure is not limited to this, and the structure of the communication apparatus may not be restricted by FIG. 14. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

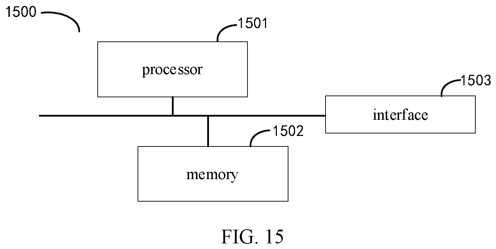

For the case where the communication apparatus may be a chip or a chip system, please refer to the structural diagram of a chip in FIG. 15. The chip shown in FIG. 15 includes a processor 1501 and an interface 1503. There may be one or more processors 1501, and there may be one or more interfaces 1503.

For the situation that the chip is used to perform the functions of the terminal having multiple panels in the embodiments of the present disclosure: the interface 1503 is used to implement the step 601 in the FIG. 6, etc.

For the situation that the chip is used to perform the functions of the network device in the embodiments of the present disclosure: the interface 1503 is used to implement the step 801 in FIG. 8, or the step 901 in FIG. 9, etc.

Optionally, the chip also includes a memory 1503, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A power headroom reporting method based on a multi-panel transmission, performed by a terminal having multiple panels, comprising:
calculating and reporting a power headroom report (PHR) according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

2. The method of claim 1, wherein calculating and reporting the PHR according to the virtual PH and based on the maximum power configuration of the terminal comprises:
calculating and reporting at least one virtual PHR based on a maximum transmit power Pcmax for the terminal, in response to the maximum power configuration of the terminal comprising the maximum transmit power Pcmax for the terminal; or
calculating and reporting at least one virtual PHR based on a maximum transmit power Pcmax,p corresponding to at least one panel, in response to the maximum power configuration of the terminal comprising a maximum transmit power Pcmax,p corresponding to each of different panels, where p is a positive integer less than or equal to N, N is a number of the multiple panels in the terminal; or
jointly calculating and reporting at least one virtual PHR based on a maximum transmit power Pcmax for the terminal and a maximum transmit power Pcmax,p corresponding to each panel, in response to the maximum power configuration of the terminal comprising the maximum transmit power Pcmax for the terminal and the maximum transmit power Pcmax,p corresponding to each panel.

3. The method of claim 2, wherein calculating and reporting the at least one virtual PHR based on the maximum transmit power Pcmax for the terminal comprises:
calculating and reporting a virtual PHR corresponding to at least one panel according to a power allocation rule and based on the maximum transmit power Pcmax for the terminal and a transmission reference assumption for a PUSCH transmission from one panel of the terminal towards a single transmission reception point (TRP), wherein the virtual PHR is associated with a transmission occasion corresponding to a PUSCH transmission reference assumption on the at least one panel for which the virtual PHR is calculated; or
calculating and reporting virtual PHRs corresponding respectively to two panels according to a power allocation rule and based on the maximum transmit power Pcmax for the terminal and a transmission reference assumption for cooperated PUSCH transmissions from two panels of the terminal towards multiple TRPs respectively, wherein each of the virtual PHRs is associated with a transmission occasion corresponding to a PUSCH transmission reference assumption on a panel for which the virtual PHR is calculated.

4. The method of claim 3, wherein calculating the at least one virtual PHR according to the power allocation rule and based on the maximum transmit power Pcmax for the terminal comprises:
calculating and reporting a virtual PHR corresponding to a predefined panel according to the power allocation rule and based on the maximum transmit power Pcmax for the terminal; or
calculating and reporting a virtual PHR corresponding to a panel indicated by first indication information sent by a network device according to the power allocation rule and based on the maximum transmit power Pcmax for the terminal; or
calculating and reporting a virtual PHR corresponding to a panel selected by the terminal according to the power allocation rule and based on the maximum transmit power Pcmax for the terminal; or
calculating and reporting a virtual PHR corresponding to a panel under a predefined rule according to the power allocation rule and based on the maximum transmit power Pcmax for the terminal; or
calculating and reporting virtual PHRs corresponding respectively to two panels according to the power allocation rule and based on the maximum transmit power Pcmax for the terminal.

5. The method of claim 2, wherein calculating and reporting the at least one virtual PHR based on the maximum transmit power Pcmax,p corresponding to the at least one panel comprises:
calculating and reporting a virtual PHR corresponding to the at least one panel according to the maximum transmit power Pcmax,p corresponding to the at least one panel and based on a transmission reference assumption for a PUSCH transmission from one panel of the terminal towards a single TRP, wherein the virtual PHR is associated with a transmission occasion corresponding to a PUSCH transmission reference assumption on the at least one panel for which the virtual PHR is calculated; or
calculating and reporting virtual PHRs corresponding respectively to two panels according to maximum transmit powers Pcmax,p corresponding respectively to the two panels and based on a transmission reference assumption for cooperated PUSCH transmissions from the two panels of the terminal towards multiple TRPs respectively, wherein each of the virtual PHRs is associated with a transmission occasion corresponding to a PUSCH transmission reference assumption on a panel for which the virtual PHR is calculated.

6. The method of claim 5, wherein calculating and reporting the virtual PHR corresponding to the at least one panel according to the maximum transmit power Pcmax,p corresponding to the at least one panel comprises:
calculating and reporting a virtual PHR of a specified panel according to a maximum transmit power Pcmax,p corresponding to the specified panel; or
calculating and reporting a virtual PHR of a corresponding panel according to a maximum transmit power Pcmax,p under a predefined rule; or
calculating two virtual PHRs of two panels respectively and reporting a virtual PHR corresponding to a panel, according to a maximum transmit power Pcmax,p corresponding to each selected panel; or
calculating and reporting two virtual PHRs of two panels respectively according to two maximum transmit powers Pcmax,p corresponding respectively to the two panels.

7. The method of claim 2, wherein jointly calculating and reporting the at least one virtual PHR based on the maximum transmit power Pcmax for the terminal and the maximum transmit power Pcmax,p corresponding to each panel comprises:
calculating and reporting the at least one virtual PHR corresponding to a panel according to the maximum transmit power Pcmax for the terminal and the maximum transmit power Pcmax,p corresponding to the panel and based on a transmission reference assumption for a PUSCH transmission from the panel of the terminal towards a single TRP; or
calculating and reporting at least two virtual PHRs according to the maximum transmit power Pcmax for the terminal and maximum transmit powers Pcmax,p corresponding respectively to the two panels and based on a transmission reference assumption for cooperated PUSCH transmissions from the two panels of the terminal towards multiple TRPs respectively.

8. The method of claim 7, wherein calculating and reporting the at least one virtual PHR according to the maximum transmit power Pcmax for the terminal and the maximum transmit power Pcmax,p corresponding to the panel comprises:
calculating and reporting a virtual PHR corresponding to the panel according to the maximum transmit power Pcmax for the terminal; or
calculating and reporting a virtual PHR corresponding to the panel according to the maximum transmit power Pcmax,p corresponding to the panel; or
calculating and reporting two virtual PHRs corresponding to the panel according to the maximum transmit power Pcmax for the terminal and the Pcmax,p corresponding the panel.

9. The method of claim 7, wherein calculating and reporting the at least two virtual PHRs according to the maximum transmit power Pcmax for the terminal and the maximum transmit powers Pcmax,p corresponding respectively to the two panels comprises:
respectively calculating and reporting two virtual PHRs corresponding to a panel of the two panels according to the maximum transmit power Pcmax for the terminal and the maximum transmit power Pcmax,p corresponding to the panel; or
respectively calculating and reporting a virtual PHR corresponding to each panel of the two panels according to the maximum transmit power Pcmax for the terminal; or
respectively calculating and reporting a virtual PHR corresponding to each panel of the two panels according to the maximum transmit powers Pcmax,p corresponding respectively to the two panels; or
calculating and reporting a virtual PHR corresponding to the terminal based on the maximum transmit power Pcmax for the terminal, and jointly calculating and reporting two virtual PHRs corresponding to a panel of the two panels according to the maximum transmit power Pcmax for the terminal and the maximum transmit power Pcmax,p corresponding to the panel; or
jointly calculating and reporting two virtual PHRs corresponding to each panel of the two panels according to the maximum transmit power Pcmax for the terminal and the maximum transmit powers Pcmax,p corresponding respectively to the two panels; or
calculating and reporting a virtual PHR corresponding to the terminal based on the maximum transmit power Pcmax for the terminal, and jointly calculating and reporting two virtual PHRs corresponding to each panel of the two panels according to the Pcmax and the maximum transmit powers Pcmax,p corresponding respectively to the two panels.

10. The method of any of claims 1-9, further comprising:
receiving second indication information sent by a network device, wherein the second indication information indicates a PHR reporting mode; and
determining the virtual PHR according to the maximum power configuration of the terminal and the PHR reporting mode.

11. The method of claim 10, wherein the PHR comprises any one of:
reporting one PHR, reporting two PHRs, reporting three PHRs, reporting four PHRs, or reporting five PHRs.

12. The method of any of claims 1-11, further comprising:
determining a virtual PHR reference format according to transmission modes on different panels in a case where one PUSCH is sent simultaneously by multiple panels using a space division multiplexing (SDM) or frequency division multiplexing (FDM) transmission scheme, in response to the PUSCH being scheduled based on single downlink control information (DCI); or
determining a virtual PHR reference format according to PUSCH transmission modes on different panels in a case where two PUSCHs are sent by multiple panels using a space division multiplexing (SDM), frequency division multiplexing (FDM) or a time division multiplexing (TDM) transmission scheme, in response to the PUSCH being scheduled based on multiple DCIs.

13. A power headroom reporting method based on a multi-panel transmission, performed by a network device, comprising:
determining that a power headroom report (PHR) reported by a terminal is calculated according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

14. The method of claim 13, wherein determining that the PHR reported by the terminal is calculated according to the virtual PH and based on the maximum power configuration of the terminal comprises:
determining that the PHR reported by the terminal is at least one virtual PHR determined based on a maximum transmit power Pcmax for the terminal, in response to the maximum power configuration of the terminal comprising the maximum transmit power Pcmax for the terminal; or
determining that the PHR reported by the terminal is at least one virtual PHR determined based on a maximum transmit power Pcmax,p corresponding to at least one panel, in response to the maximum power configuration of the terminal comprising a maximum transmit power Pcmax,p corresponding to each of different panels, where p is a positive integer less than or equal to N, N is a number of the multiple panels in the terminal; or
determining that the PHR reported by the terminal is at least one virtual PHR determined based on a maximum transmit power Pcmax for the terminal and a maximum transmit power Pcmax,p corresponding to each panel, in response to the maximum power configuration of the terminal comprising the maximum transmit power Pcmax for the terminal and the maximum transmit power Pcmax,p corresponding to each panel.

15. The method of claim 14, wherein determining that the PHR reported by the terminal is the at least one virtual PHR determined based on the maximum transmit power Pcmax for the terminal comprises:
determining that the PHR reported by the terminal is a virtual PHR corresponding to at least one panel calculated by the terminal according to a power allocation rule and based on the maximum transmit power Pcmax for the terminal and a transmission reference assumption for a PUSCH transmission from one panel of multiple panels towards a single transmission reception point (TRP), wherein the virtual PHR is associated with a transmission occasion corresponding to a PUSCH transmission reference assumption on the at least one panel for which the virtual PHR is calculated; or
determining that the PHR reported by the terminal comprises virtual PHRs corresponding respectively to two panels calculated by the terminal according to a power allocation rule and based on the maximum transmit power Pcmax for the terminal and a transmission reference assumption for cooperated PUSCH transmissions from two panels of multiple panels towards multiple TRPs respectively, wherein each of the virtual PHRs is associated with a transmission occasion corresponding to a PUSCH transmission reference assumption on a panel for which the virtual PHR is calculated.

16. The method of claim 14, wherein determining that the PHR reported by the terminal is the at least one virtual PHR determined according to the maximum transmit power Pcmax,p corresponding to the at least one panel comprises:
determining that the PHR reported by the terminal is a virtual PHR corresponding to a predefined panel calculated by the terminal according to the power allocation rule and based on the maximum transmit power Pcmax for the terminal; or
determining that the PHR reported by the terminal is a virtual PHR corresponding to a panel indicated by first indication information sent by a network device calculated by the terminal according to the power allocation rule and based on the maximum transmit power Pcmax for the terminal; or
determining that the PHR reported by the terminal is a virtual PHR corresponding to a panel selected by the terminal calculated by the terminal according to the power allocation rule and based on the maximum transmit power Pcmax for the terminal; or
determining that the PHR reported by the terminal is a virtual PHR corresponding to a panel under a predefined rule calculated by the terminal according to the power allocation rule and based on the maximum transmit power Pcmax for the terminal; or
determining that the PHR reported by the terminal comprises virtual PHRs corresponding respectively to two panels calculated by the terminal according to the power allocation rule and based on the maximum transmit power Pcmax for the terminal.

17. The method of claim 14, wherein determining that the PHR reported by the terminal is the at least one virtual PHR determined based on the maximum transmit power Pcmax,p corresponding to the at least one panel comprises:
determining that the PHR reported by the terminal is a virtual PHR corresponding to the at least one panel calculated by the terminal according to the maximum transmit power Pcmax,p corresponding to the at least one panel and based on a transmission reference assumption for a PUSCH transmission from one panel of multiple panels towards a single TRP, wherein the virtual PHR is associated with a transmission occasion corresponding to a PUSCH transmission reference assumption on the at least one panel for which the virtual PHR is calculated; or
determining that the PHR reported by the terminal comprises virtual PHRs corresponding respectively to two panels calculated by the terminal according to maximum transmit powers Pcmax,p corresponding respectively to the two panels and based on a transmission reference assumption for cooperated PUSCH transmissions from the two panels of multiple panels towards multiple TRPs respectively, wherein each of the virtual PHRs is associated with a transmission occasion corresponding to a PUSCH transmission reference assumption on a panel for which the virtual PHR is calculated.

18. The method of claim 17, wherein calculating and reporting the virtual PHR corresponding to the at least one panel according to the maximum transmit power Pcmax,p corresponding to the at least one panel comprises:
calculating and reporting a virtual PHR of a specified panel according to a maximum transmit power Pcmax,p corresponding to the specified panel; or
calculating and reporting a virtual PHR of a corresponding panel according to a maximum transmit power Pcmax,p under a predefined rule; or
calculating two virtual PHRs of two panels respectively and reporting a virtual PHR corresponding to a panel, according to a maximum transmit power Pcmax,p corresponding to each selected panel; or
calculating and reporting two virtual PHRs of two panels respectively according to two maximum transmit powers Pcmax,p corresponding respectively to the two panels.

19. The method of claim 14, wherein determining that the PHR reported by the terminal is the at least one virtual PHR jointly determined based on the maximum transmit power Pcmax for the terminal and the maximum transmit power Pcmax,p corresponding to each panel comprises:
determining that the PHR reported by the terminal is the at least one virtual PHR corresponding to a panel calculated by the terminal according to the maximum transmit power Pcmax for the terminal and a maximum transmit power Pcmax,p corresponding to the panel and based on a transmission reference assumption for a PUSCH transmission from the panel of multiple panels towards a single TRP; or
determining that the PHR reported by the terminal comprises at least two virtual PHRs calculated by the terminal according to the maximum transmit power Pcmax for the terminal and maximum transmit powers Pcmax,p corresponding respectively to the two panels and based on a transmission reference assumption for cooperated PUSCH transmissions from the two panels of multiple panels towards multiple TRPs respectively.

20. The method of claim 19, wherein determining that the PHR reported by the terminal is the at least one virtual PHR corresponding to the panel calculated by the terminal according to the maximum transmit power Pcmax for the terminal and the maximum transmit power Pcmax,p corresponding to the panel and based on the transmission reference assumption for the PUSCH transmission from the panel of multiple panels towards the single TRP comprises:
in response to the terminal reporting a virtual PHR, determining that the virtual PHR is calculated by the terminal according to the maximum transmit power Pcmax for the terminal; or
in response to the terminal reporting a virtual PHR, determining that the virtual PHR is a virtual PHR calculated by the terminal according to the maximum transmit power Pcmax,p corresponding to the panel; or
in response to the terminal reporting two virtual PHRs, determining that the two virtual PHRs comprise two virtual PHRs calculated by the terminal according to the maximum transmit power Pcmax for the terminal and the maximum transmit power Pcmax,p corresponding the panel.

21. The method of claim 19, wherein determining that the PHR reported by the terminal comprises the at least two virtual PHRs calculated by the terminal according to the maximum transmit power Pcmax for the terminal and the maximum transmit powers Pcmax,p corresponding respectively to the two panels and based on a transmission reference assumption for cooperated PUSCH transmissions from the two panels of multiple panels towards multiple TRPs respectively comprises:
in response to the terminal reporting two virtual PHRs, determining that the two virtual PHRs are respectively calculated by the terminal according to the maximum transmit power Pcmax for the terminal and themaximum transmit power Pcmax,p corresponding to a panel of the two panels; or
in response to the terminal reporting two virtual PHRs, determining that the two virtual PHRs comprise a virtual PHR corresponding to each panel of the two panels respectively calculated by the terminal according to the maximum transmit power Pcmax for the terminal; or
in response to the terminal reporting two virtual PHRs, determining that the two virtual PHRs comprise a virtual PHR corresponding to each panel of the two panels respectively calculated by the terminal according to the maximum transmit powers Pcmax,p corresponding respectively to the two panels; or
in response to the terminal reporting three virtual PHRs, determining that the three virtual PHRs comprise a virtual PHR corresponding to the terminal calculated by the terminal based on the maximum transmit power Pcmax for the terminal and two virtual PHRs corresponding to a panel of the two panels jointly calculated by the terminal according to the maximum transmit power Pcmax for the terminal and the maximum transmit power Pcmax,p corresponding to the panel; or
in response to the terminal reporting four virtual PHRs, determining that the four virtual PHRs comprise two virtual PHRs corresponding to each panel of the two panels jointly calculated by the terminal according to the maximum transmit power Pcmax for the terminal and the maximum transmit powers Pcmax,p corresponding respectively to the two panels; or
in response to the terminal reporting five virtual PHRs, determining that the five virtual PHRs comprise a virtual PHR corresponding to the terminal calculated by the terminal based on the maximum transmit power Pcmax for the terminal and two virtual PHRs corresponding to each panel of the two panels jointly calculated by the terminal according to the maximum transmit power Pcmax for the terminal and the maximum transmit powers Pcmax,p corresponding respectively to the two panels.

22. The method of any of claims 13-21, further comprising:
sending second indication information to the terminal, wherein the second indication information is configured to indicate a PHR reporting mode.

23. The method of claim 22, wherein the PHR reporting mode comprises any one of:
reporting one PHR, reporting two PHRs, reporting three PHRs, reporting four PHRs, or reporting five PHRs.

24. The method of any of claims 13-23, further comprising:
determining that the terminal determines a virtual PHR reference format according to transmission modes on different panels in a case where one PUSCH is sent simultaneously by multiple panels using a space division multiplexing (SDM) or frequency division multiplexing (FDM) transmission scheme, in response to the PUSCH being scheduled based on single downlink control information (DCI); or
determining that the terminal determines a virtual PHR reference format according to PUSCH transmission modes on different panels in a case where two PUSCHs are sent by multiple panels using a space division multiplexing (SDM), frequency division multiplexing (FDM) or a time division multiplexing (TDM) transmission scheme, in response to the PUSCH being scheduled based on multiple DCIs.

25. A communication apparatus, applicable to a terminal having multiple panels, comprising:
a processing module, configured to calculate and report a power headroom report (PHR) according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

26. A communication apparatus, applicable to a network device, comprising:
a processing module, configured to determine that a power headroom report (PHR) reported by a terminal is calculated according to a virtual power headroom (PH) and based on a maximum power configuration of the terminal, in response to the terminal having no physical uplink shared channel (PUSCH) actually sent on a first sending time slot corresponding to the PUSCH for carrying a media access control control unit (MAC CE) PHR, and the PUSCH being configured or scheduled for an uplink simultaneous transmission of multiple panels (STxMP).

27. A communication apparatus, comprising a processor and a memory for storing a computer program, wherein when the computer program stored in the memory is executed by the processor, the apparatus is caused to implement the method of any one of claims 1 to 12, or to implement the method of any one of claims 13 to 24.

28. A computer-readable storage medium for storing instructions, wherein when the instructions are executed, the method of any one of claims 1 to 12 or the method of any one of claims 13 to 24 is implemented.
